(19) Europäisches Patentamt
European Patent Office
Office européen des brevets

(11) **EP 4 230 686 A1**

(12) **EUROPÄISCHE PATENTANMELDUNG**

(43) Veröffentlichungstag:
**23.08.2023 Patentblatt 2023/34**

(21) Anmeldenummer: **23157347.8**

(22) Anmeldetag: **17.02.2023**

(51) Internationale Patentklassifikation (IPC):
**C08J 5/04** *(2006.01)* **C08L 33/08** *(2006.01)*
**C08L 89/06** *(2006.01)* **C08L 1/02** *(2006.01)*

(52) Gemeinsame Patentklassifikation (CPC):
**C08J 5/045; C08L 1/02; C08L 33/08; C08L 33/10;
C08L 89/06;** C08J 2301/02; C08J 2389/06;
C08J 2433/08

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **18.02.2022 EP 22157593**

(71) Anmelder: **Salamander SPS GmbH & Co. KG
86842 Türkheim (DE)**

(72) Erfinder: **Schmiedeknecht, Götz
82166 Gräfelfing (DE)**

(74) Vertreter: **Schmid, Nils T.F.
SKM-IP PartGmbB
Oberanger 45
80331 München (DE)**

(54) **VERBUNDMATERIAL**

(57) Die vorliegende Erfindung betrifft ein nicht-thermoplastisches Verbundmaterial, umfassend (i) 25 bis 80 Gew.-% Fasermaterial, bezogen auf das Gesamtgewicht des nicht-thermoplastischen Verbundmaterials; und (ii) 10 bis 50 Gew.-% eines Bindemittels, bezogen auf das Gesamtgewicht des nicht-thermoplastischen Verbundmaterials; dessen Verwendung, ein Verfahren zu dessen Herstellung und ein Erzeugnis, das das nicht-thermoplastische Verbundmaterial umfasst.

**Abbildung 1**

Emissionstest nach VD277

EP 4 230 686 A1

**Beschreibung**

Die Erfindung betrifft ein Verbundmaterial, ein Erzeugnis, das das Verbundmaterial umfasst, sowie die Verwendung desselben.

Ein Verbundmaterial ist ein Werkstoff aus zwei oder mehr verbundenen Materialien, der andere Werkstoffeigenschaften besitzt als seine einzelnen Komponenten. Für die Eigenschaften der Verbundwerkstoffe sind stoffliche Eigenschaften und Geometrie der Komponenten von Bedeutung. Die Verbindung erfolgt durch Stoff- oder Formschluss oder eine Kombination von beidem.

Beispielsweise kann ein Verbundmaterial ein Bindemittel umfassen, mittels dem ein anderes Material, etwa ein Fasermaterial, gebunden wird. Das Bindemittel kann insbesondere ein Polymer oder ein Polymergemisch sein.

Ein Beispiel für ein solches Verbundmaterial sind sogenannte Lederfaserstoffe, bzw. Faserkunstleder. Dies sind Materialien, die vor allem aus Fasern, insbesondere Lederfasern, einem geeigneten Bindemittel und ggf. weiteren Additiven bestehen. Lederfaserstoffe werden etwa für Hinterkappen, Absätze, Lauf- und Brandsohlen, sowie für sogenanntes Rahmenmaterial eingesetzt, aber auch in der Lederwaren- und Möbelindustrie und in der Buchbinderei.

Gemäß dem Stand der Technik werden als Fasern vor allem Lederfasern, die als Abfallprodukt der Lederherstellung entstehen, und Naturkautschuk als Bindemittel eingesetzt.

Der Einsatz von Naturkautschuk als Bindemittel ist allerdings dahingehend nachteilhaft, dass die so hergestellten Verbundmaterialien eine geringe Alterungsbeständigkeit haben. Dies ist vor allem bei einem Einsatz der Verbundmaterialien in Bauprodukten oder in Produkten für die Fahrzeuginnenausstattung problematisch. Die dauerhafte Einwirkung höherer Temperaturen, Sauerstoff, Ozon und ähnlicher Alterungsfaktoren führt zum Abbau der Polymerstruktur und damit zum Verlust der Bindekraft.

Des Weiteren sind bei der Verwendung der Verbundstoffe in Wohninnenräumen und in Fahrzeuginnenräumen Grenzwerte hinsichtlich der Emission schädlicher Stoffe zu beachten.

Aus der WO 2020/212062 A1 ist ein thermoplastisches, faserhaltiges Verbundmaterial bekannt. Ein solches thermoplastisches Material ist allerdings aufgrund seiner geringen Temperaturbeständigkeit nachteilhaft, insbesondere dann, wenn die Verformung eines Bauteils, das das Verbundmaterial umfasst, bei erhöhten Temperaturen vermieden werden muss, um die Verwendbarkeit des Bauteils nicht zu beeinträchtigen.

Es ist daher die Aufgabe der vorliegenden Erfindung, ein Verbundmaterial, insbesondere einen Lederfaserstoff, bereitzustellen, das Nachteile des Stands der Technik überwindet, insbesondere eine verbesserte Temperatur- und Alterungsbeständigkeit und ein verbessertes Emissionsverhalten aufweist. Es ist eine weitere Aufgabe der vorliegenden Erfindung, ein Verbundmaterial, insbesondere einen Lederfaserstoff, bereitzustellen, das vorteilhaft in Fahrzeuginnenräumen verwendet werden kann.

Eine weitere Aufgabe der Erfindung liegt darin, ein Verbundmaterial umfassend ein Fasermaterial und ein Bindemittel, ein Erzeugnis, das das Verbundmaterial umfasst, sowie die Verwendung desselben und ein Verfahren zum Herstellen eines Verbundmaterials bereitzustellen, das ökologisch verträglicher ist.

Diese Aufgabe wird durch den Gegenstand der unabhängigen Ansprüche gelöst. Weitere Ausführungen sind in den abhängigen Ansprüchen angegeben.

Die Aufgabe wird insbesondere gelöst durch ein nicht-thermoplastisches Verbundmaterial, umfassend:

(i) 25 bis 80 Gew.-% Fasermaterial, bezogen auf das Gesamtgewicht des nicht-thermoplastischen Verbundmaterials; und

(ii) 10 bis 50 Gew.-% eines Bindemittels, bezogen auf das Gesamtgewicht des nicht-thermoplastischen Verbundmaterials;

dadurch gekennzeichnet, dass das Bindemittel in dem nicht-thermoplastischen Verbundmaterial keine durchgängige Phase bildet.

Ein Verbundmaterial ist insbesondere ein Werkstoff aus zwei oder mehr verbundenen Materialien, der andere Werkstoffeigenschaften besitzt als seine einzelnen Komponenten. Für die Eigenschaften der Verbundwerkstoffe sind insbesondere stoffliche Eigenschaften und Geometrie der Komponenten von Bedeutung. Die Verbindung erfolgt insbesondere durch Stoff- oder Formschluss oder eine Kombination von beidem.

Das erfindungsgemäße Verbundmaterial umfasst ein Fasermaterial und ein Bindemittel. Insbesondere sind Fasermaterial und Bindemittel derart aufeinander abgestimmt, dass das Bindemittel in dem nicht-thermoplastischen Verbundmaterial keine durchgängige Phase bildet, beispielsweise das nicht-thermoplastische Verbundmaterial ein, bindemittelgebundener, d.h. etwa ein polymergebundener Vliesstoff ist. Dadurch kann insbesondere vermieden werden, dass das nicht-thermoplastische Verbundmaterial sich bei, insbesondere unbeabsichtigter, Erwärmung plastisch verformt. Insbesondere kann das Bindemittel eine Glasübergangstemperatur von weniger als 20°C aufweisen.

Das erfindungsgemäße Verbundmaterial zeichnet sich dadurch aus, dass es kein thermoplastisches Verhalten aufweist, also unter Wärmeeinfluss nicht (bzw. nicht wesentlich) plastisch verformbar ist (erweicht). Ebenso nimmt die Bruchdehnung des erfindungsgemäßen nicht-thermoplastischen Verbundmaterials unter Wärmeeinfluss nicht zu sondern ab. Dies bedeutet insbesondere, dass thermoplastische Effekte für das erfindungsgemäße nicht-thermoplastische Verbundmaterial auf makroskopische Ebene nicht beobachtet werden können.

Dies wird erfindungsgemäß dadurch erreicht, dass das Bindemittel in dem erfindungsgemäßen nicht-thermoplastischen Verbundmaterial nicht in einer durchgängigen Phase vorhanden ist. Das Bindemittel liegt also erfindungsgemäß nicht als eine im wesentlichen monolithische Struktur (Matrix) vor, in der das Fasermaterial eingebettet ist. Vielmehr ist das Bindemittel in dem nicht-thermoplastischen Verbundmaterial in einer Vielzahl diskreter, d.h. räumlich voneinander getrennter Abschnitte vorhanden. Hierdurch wird insbesondere eine verbesserte Temperaturbeständigkeit des Verbundmaterials gegenüber bekannten, insbesondere thermoplastischen Verbundmaterialien erreicht.

Es kann etwa vorgesehen sein, dass das nicht-thermoplastische Verbundmaterial in der Form eines bindemittel(polymer)gebundenen Vliesstoffs vorliegt, in dem diskrete, voneinander getrennte Bindemittelmengen die Bindung der Fasern des Vliesstoffs zueinander verstärken. Eine solche Struktur zeichnet sich durch sein nicht-thermoplastisches Verhalten und Betonung der Fasereigenschaften (Offenporigkeit, Feuchtigkeitsregulierung, gute Verklebbarkeit) aus.

Es kann vorgesehen sein, dass das nicht-thermoplastische Verbundmaterial eine geringe Gesamtemission nach VDA 277 oder VDA 278 aufweist. Insbesondere kann vorgesehen sein, dass das nicht-thermoplastische Verbundmaterial Gesamtemission von weniger als 250 $\mu$gC/g nach VDA 277 aufweist. Es kann ebenfalls vorgesehen sein, dass das nicht-thermoplastische Verbundmaterial Gesamtemission von weniger als 200 $\mu$g/g nach VDA 278 und/oder einen Fog-Wert von < 1000 $\mu$g/g aufweist. Es kann vorgesehen sein, dass das nicht-thermoplastische Verbundmaterial eine Gesamtemission nach AgBB/DIN EN ISO 16000 von < 0,001 mg/m$^3$ aufweist. Es kann vorgesehen sein, dass das nicht-thermoplastische Verbundmaterial eine TVOC 3d (*total volatile organic compound*; 3 Tage) Emission von < 10 mg/m$^3$ aufweist. Die angegebenen Normen VDA 277, VDA 278, DIN EN ISO 16000, AgBB und TVOC 3d beziehen sich jeweils auf die zum Anmeldetag (Prioritätstag) gültige Fassung.

Die Gesamtemission und/oder die TVOC-Emission des nicht-thermoplastischen Verbundmaterials können entweder durch die Auswahl geeigneter Bestandteile, insbesondere eines geeigneten Bindemittels, etwa durch ein geeignetes Herstellungsverfahren desselben, und geeigneter Additive, erreicht werden. Es kann etwa vorgesehen sein, dass zum Zweck der Emissionsreduktion ein Bindemittel mit einem geringen Anteil an Restmonomer(en) und/oder anderen Emittenten verwendet wird.

Alternativ kann die Gesamtemission und/oder die TVOC-Emission des nicht-thermoplastischen Verbundmaterials gemäß den obigen Ausführungsformen dadurch erreicht werden, dass entweder das nicht-thermoplastische Verbundmaterial oder ein oder mehrerer Materialien, die zur Herstellung des nicht-thermoplastischen Verbundmaterials verwendet werden, einer chemischen oder physikalischen Reinigungs- und Desodorierungsprozedur unterworfen wurden. Geeignete chemische oder physikalische Reinigungs- und Desodorierungsprozeduren sind etwa eine Nachpolymerisation, ein Steam-Stripping- oder Gas-stripping-Schritt oder eine Membranfiltration oder Kombinationen daraus. Ein entsprechendes Verfahren ist etwa aus der EP 0 967 232 A1 bekannt.

Es kann vorgesehen sein, dass das nicht-thermoplastische Verbundmaterial das Fasermaterial in einer Menge von mindestens 30 Gew.-%, bezogen auf das Gesamtgewicht des nicht-thermoplastischen Verbundmaterials umfasst. Es kann vorgesehen sein, dass das nicht-thermoplastische Verbundmaterial das Fasermaterial in einer Menge von mindestens 35 Gew.-%, bezogen auf das Gesamtgewicht des nicht-thermoplastischen Verbundmaterials umfasst. Es kann vorgesehen sein, dass das nicht-thermoplastische Verbundmaterial das Fasermaterial in einer Menge von mindestens 40 Gew.-%, bezogen auf das Gesamtgewicht des nicht-thermoplastischen Verbundmaterials umfasst. Es kann vorgesehen sein, dass das nicht-thermoplastische Verbundmaterial das Fasermaterial in einer Menge von mindestens 45 Gew.-%, bezogen auf das Gesamtgewicht des nicht-thermoplastischen Verbundmaterials umfasst. Es kann vorgesehen sein, dass das nicht-thermoplastische Verbundmaterial das Fasermaterial in einer Menge von mindestens 50 Gew.-%, bezogen auf das Gesamtgewicht des nicht-thermoplastischen Verbundmaterials umfasst. Es kann vorgesehen sein, dass das nicht-thermoplastische Verbundmaterial das Fasermaterial in einer Menge von mindestens 52 Gew.-%, bezogen auf das Gesamtgewicht des nicht-thermoplastischen Verbundmaterials umfasst. Es kann vorgesehen sein, dass das nicht-thermoplastische Verbundmaterial das Fasermaterial in einer Menge von mindestens 55 Gew.-%, bezogen auf das Gesamtgewicht des nicht-thermoplastischen Verbundmaterials umfasst. Es kann vorgesehen sein, dass das nicht-thermoplastische Verbundmaterial das Fasermaterial in einer Menge von mindestens 58 Gew.-%, bezogen auf das Gesamtgewicht des nicht-thermoplastischen Verbundmaterials umfasst. Es kann vorgesehen sein, dass das nicht-thermoplastische Verbundmaterial das Fasermaterial in einer Menge von mindestens 60 Gew.-%, bezogen auf das Gesamtgewicht des nicht-thermoplastischen Verbundmaterials umfasst.

Es kann vorgesehen sein, dass das nicht-thermoplastische Verbundmaterial das Fasermaterial in einer Menge von höchstens 75 Gew.-%, bezogen auf das Gesamtgewicht des nicht-thermoplastischen Verbundmaterials umfasst. Es kann vorgesehen sein, dass das nicht-thermoplastische Verbundmaterial das Fasermaterial in einer Menge von höchstens 70 Gew.-%, bezogen auf das Gesamtgewicht des nicht-thermoplastischen Verbundmaterials umfasst. Es kann vorgesehen sein, dass das nicht-thermoplastische Verbundmaterial das Bindemittel in einer Menge von mindestens 15 Gew.-%, bezogen auf das Gesamtgewicht des nicht-thermoplastischen Verbundmaterials umfasst.

Es kann vorgesehen sein, dass das nicht-thermoplastische Verbundmaterial das Bindemittel in einer Menge von mindestens 20 Gew.-%, bezogen auf das Gesamtgewicht des nicht-thermoplastischen Verbundmaterials umfasst. Es kann vorgesehen sein, dass das nicht-thermoplastische Verbundmaterial das Bindemittel in einer Menge von mindestens 25 Gew.-%, bezogen auf das Gesamtgewicht des nicht-thermoplastischen Verbundmaterials umfasst. Es kann vorgesehen sein, dass das nicht-thermoplastische Verbundmaterial das Bindemittel in einer Menge von mindestens 30 Gew.-%, bezogen auf das Gesamtgewicht des nicht-thermoplastischen Verbundmaterials umfasst.

Es kann vorgesehen sein, dass das nicht-thermoplastische Verbundmaterial das Bindemittel in einer Menge von höchstens 45 Gew.-%, bezogen auf das Gesamtgewicht des nicht-thermoplastischen Verbundmaterials umfasst. Es kann vorgesehen sein, dass das nicht-thermoplastische Verbundmaterial das Bindemittel in einer Menge von höchstens 40 Gew.-%, bezogen auf das Gesamtgewicht des nicht-thermoplastischen Verbundmaterials umfasst.

Es kann vorgesehen sein, dass ein Gewichtsverhältnis von Fasermaterial zu Bindemittel in einem Bereich zwischen 1:1 bis 3:1, besonders bevorzugt zwischen 1:1 bis 2.5:1, insbesondere 2:1 bis 1,1:1 ist.

Es kann vorgesehen sein, dass das Bindemittel ein Polymer ist, das mindestens 50 Gew.-% eines ethylenisch ungesättigten Monomers mit zumindest einer Carbonsäureestergruppe enthält. Es kann vorgesehen sein, dass das Bindemittel ein Polymer ist, das mindestens 60 Gew.-% eines ethylenisch ungesättigten Monomers mit zumindest einer Carbonsäureestergruppe enthält. Es kann vorgesehen sein, dass das Bindemittel ein Polymer ist, das mindestens 70 Gew.-% eines ethylenisch ungesättigten Monomers mit zumindest einer Carbonsäureestergruppe enthält. Es kann vorgesehen sein, dass das Bindemittel ein Polymer ist, das mindestens 80 Gew.-% eines ethylenisch ungesättigten Monomers mit zumindest einer Carbonsäureestergruppe enthält. Es kann vorgesehen sein, dass das Bindemittel ein Polymer ist, das mindestens 90 Gew.-% eines ethylenisch ungesättigten Monomers mit zumindest einer Carbonsäureestergruppe enthält. Es kann vorgesehen sein, dass das Bindemittel ein Polymer ist, das mindestens 95 Gew.-% eines ethylenisch ungesättigten Monomers mit zumindest einer Carbonsäureestergruppe enthält. Es kann vorgesehen sein, dass das Bindemittel ein Polymer ist, das mindestens 99 Gew.-% eines ethylenisch ungesättigten Monomers mit zumindest einer Carbonsäureestergruppe enthält. Es kann vorgesehen sein, dass das Bindemittel ein Polymer ist, das aus einem ethylenisch ungesättigten Monomer besteht.

Es kann vorgesehen sein, dass das Bindemittel ein Polyalkylacrylat, ein Polyalkyl(meth)acrylat, ein Polyurethan, ein Vinylacetat oder Copolymere oder Mischungen von aus zwei oder mehr davon ist. Es kann vorgesehen sein, dass das Bindemittel ein Polyalkylacrylat, ein Polyurethan oder Copolymere oder ein Gemisch aus zwei oder mehr davon ist. Es kann vorgesehen sein, dass das Bindemittel ein Polyalkylacrylat, insbesondere ein unvernetztes Polyalkylacrylat, ist.

Es kann vorgesehen sein, dass das Polyurethan ein Polyesterpolyurethan, insbesondere ein anionisches und/oder aliphatisches Polyesterpolyurethan, ein Polyetherpolyurethan oder ein Gemisch aus zwei oder mehreren davon ist. Es kann vorgesehen sein, dass das Bindemittel ein Copolymer eines Polyesterpolyurethans und eines Polyalkylacrylats, ein Copolymer eines Polyetherpolyurethans und eines Polyalkylacrylats, ein Copolymer eines Polyesterpolyurethans, eines Polyetherpolyurethans und eines Polyalkylacrylats, oder ein Gemisch aus zwei oder mehr davon ist.

Es kann vorgesehen sein, dass das Bindemittel Poly-$C_1$ bis $C_{12}$-Alkylacrylat ist. Es kann vorgesehen sein, dass das Bindemittel Poly-$C_1$ bis $C_{10}$-Alkylacrylat ist. Es kann vorgesehen sein, dass das Bindemittel Poly-$C_1$ bis $C_8$-Alkylacrylat ist. Es kann vorgesehen sein, dass das Bindemittel Poly-$C_2$ bis $C_6$-Alkylacrylat ist. Es kann vorgesehen sein, dass das Bindemittel Poly-$C_3$ bis $C_5$-Alkylacrylat ist. Es kann vorgesehen sein, dass das Bindemittel Poly-$C_4$-Alkylacrylat (Polybutylacrylat) ist. Es kann vorgesehen sein, dass das Polybutylacrylat eine Glasübergangstemperatur Tg von -50°C bis -5°C, vorzugsweise -40°C bis -20°C, hat.

Es kann vorgesehen sein, dass das Bindemittel Methacrylat, Ethylacrylat, n-Butylacrylat, Isobutylacrylat, tert.-Butylacrylat, Hexylacrylat, 2-Ethylhexylacrylat und/oder Laurylacrylat enthält oder aus einem oder mehrerer derselben besteht.

Es kann vorgesehen sein, dass das Bindemittel ein anionisches Polyalkylacrylat umfasst oder aus diesem besteht, wobei das Polyalkylacrylat wie oben definiert ausgewählt sein kann, insbesondere das Bindemittel ein anionisches Polybutylacrylat umfasst oder ist.

Es kann vorgesehen sein, dass das Bindemittel eine Glasübergangstemperatur (Tg) hat, die ausgewählt ist aus der Gruppe, bestehend aus weniger als 0°C, weniger als -5°C, weniger als -10°C, weniger als -15 °C, weniger als -20 °C, weniger als -25 °C, weniger als -28 °C, von -50°C bis -5°C, von -40°C bis -20°C, von -35°C bis -25°C, von -32 °C bis-28°C, beispielsweise etwa -30°C, jeweils bestimmt durch Dynamische Differenzkalorimetrie (DSC).

Es kann vorgesehen sein, dass das Bindemittel eine Viskosität von höchstens 200 mPa.s, beispielsweise von 20 bis 200 mPa.s nach ISO 1652, Brookfiled RVT Spindel 1/Umin 10/Faktor 5 hat.

Es kann vorgesehen sein, dass das Bindemittel ein spezifisches Gewicht von 1.00 bis 1.10 bei 25°C, insbesondere 1.02 bis 1.06 bei 15°C, beispielsweise etwa 1.04 °C hat.

Das erfindungsgemäße nicht-thermoplastische Verbundmaterial kann ein Fasermaterial und ein Bindemittel umfassen, wobei das Bindemittel einen biologisch abbaubaren Anteil von wenigstens 20 Gew.-%, bezogen auf das Gesamtgewicht des Bindemittels, aufweist. Ein solches nicht-thermoplastisches Verbundmaterial weist eine hohe ökologische Verträglichkeit auf, die für die folgenden Ausführungsformen besonders stark ausgeprägt ist.

Vorzugsweise beträgt der biologisch abbaubare Anteil des Bindemittels wenigstens 30 Gew.-%, 40 Gew.-%, 50 Gew.-%, 60 Gew.-%, 70 Gew.-%, 80 Gew.-%, 90 Gew.-%, 95 Gew.-%, 99 Gew.-% oder 100 Gew.-% bezogen auf das Gesamtgewicht des Bindemittels. Überraschenderweise hat sich herausgestellt, dass es bei dem Einsatz des Verbundmaterials entgegen der Auffassung aus dem Stand der Technik nicht immer auf die thermoplastische Verformbarkeit ankommt, sodass auf die aus dem Stand der Technik bekannten Styrol-Acrylate im Bindemittel verzichtet werden kann. Insbesondere beim Einsatz des Verbundmaterials für Ummantelungen, Kaschierungen, Tapeten, für die Beschichtung von Einrichtungsgegenständen, für die Herstellung von Bezügen, für Modeaccessoires und/oder für Schuhkomponenten kommt es nicht auf die thermoplastische Verformbarkeit des Verbundmaterials an. Es wurde überraschenderweise festgestellt, dass, insbesondere bei obigen Anwendungsgebieten, ein hoher Anteil an biologisch abbaubaren Bindemitteln eingesetzt werden kann, ohne für die entsprechenden Anwendungsgebiete maßgebliche Eigenschaften des Verbundmaterials zu verlieren. Dadurch kann die biologische Abbaubarkeit und somit auch die Nachhaltigkeit des gesamten Verbundmaterials deutlich erhöht werden. Überraschenderweise wurde festgestellt, dass sogar Verbundmaterialien genutzt werden können, deren Fasermaterial zu 100% aus Pflanzenfasermaterial und deren Bindemittel zu 100% aus biologisch abbaubaren Bindemitteln bestehen, was zu vollständig biologisch abbaubaren Verbundwerkstoffen führen kann.

Unter biologisch abbaubar im Sinne der vorliegenden Erfindung sind insbesondere Bindemittel zu verstehen, welche die Anforderungen der Norm ASTM-D6400-19, insbesondere die in den Abschnitten 5 und 6 definierten Tests erfüllen. Demnach kann die Formulierung "biologisch abbaubar" gemäß diesem Aspekt der Erfindung alternativ auch als "kompostierbar gemäß ASTM-D6400-19" bezeichnet werden.

Vorzugsweise umfasst der biologisch abbaubare Anteil zumindest ein Polymer, wobei das Polymer ausgewählt ist aus der Gruppe bestehend aus Polyester, insbesondere aliphatischer Polyester, Polyamid, Polyacetal, Polyvinylalkohol, Polylactid, Polyurethan, Kautschuk, insbesondere Naturkautschuk, Polyvinylester, insbesondere Polyvinylacetat, Polybutadien, Zellulose und deren Derivate, Stärke und deren Derivate, einem Copolymer von zwei oder mehreren davon und einem Gemisch von zwei oder mehreren davon. Besonders bevorzugt ist das Polymer ausgewählt aus der Gruppe, bestehend aus Naturkautschuk, Polyurethan, Polyvinylester, Polybutadien, einem Copolymer von zwei oder mehreren davon und einem Gemisch von zwei oder mehreren davon. Die zuvor genannten Bindemittel haben sich als besonders geeignet zur Bereitstellung eines biologisch abbaubaren Verbundmaterials herausgestellt. Demnach kann dieser Aspekt der Erfindung alternativ zur Formulierung "biologisch abbaubar" auch durch Auflistung einer oder mehrerer der zuvor genannten Bindemittel formuliert werden. Besonders vorteilhaft an Polyurethan und/oder Polylactid ist, dass diese zu einem hohen Anteil, insbesondere von wenigstens 80 Gew.-% bezogen auf das Gesamtgewicht des Bindemittels, von nachwachsenden Ressourcen gewinnbar sind.

Als besonders bevorzugt hat es sich herausgestellt, für den biologisch abbaubaren Anteil des Bindemittels ein biogenes Polymer zu verwenden. Besonders vorteilhaft an dem Einsatz von biogenen Bindemitteln ist, dass diese frei von chemischen Syntheseverfahren gewonnen werden können und somit bereits in ihrer Herstellung zur Umweltverträglichkeit des späteren Verbundmaterials beitragen. Demnach kann der "biologisch abbaubare Anteil" gemäß diesem Aspekt der Erfindung alternativ oder zusätzlich auch als "biogener Anteil" bezeichnet werden. Als besonders bevorzugt hat sich die Auswahl eines biogenen Polymers aus der Gruppe bestehend aus Kautschuk, insbesondere Naturkautschuk, Zellulose und deren Derivate, Stärke und deren Derivate, einem Copolymer von zwei oder mehreren davon und einem Gemisch von zwei oder mehreren davon, herausgestellt.

Es hat sich herausgestellt, dass insbesondere der Einsatz von Styrol-Acrylat als Bindemittel die biologische Abbaubarkeit des Verbundmaterials deutlich beeinträchtigt. Insbesondere liegt Styrol-Acrylat in der Regel in feinverteilter Form im Verbundmaterial und nach der Zersetzung in Form von relativ kleinen Plastikpartikeln (Mikroplastik), insbesondere mit einem Äquivalenzdurchmesser von weniger als 0,1 mm, vor, die auf Grund der kleinen Partikelgröße nicht mit konventionellen Kompost-Siebanlagen ausgesiebt werden können und das Material somit nachhaltig kontaminieren. Insofern wurde festgestellt, dass bereits die Reduzierung des Styrol-Acrylat-Anteils gegenüber dem Stand der Technik zu einer Erhöhung der biologischen Abbaubarkeit des Verbundmaterials führt. Insofern kann der auf den "biologisch abbaubaren Anteil" des Bindemittels gerichtete Aspekt der Erfindung alternativ oder zusätzlich auch als "Styrol- und/oder Acrylat-freier Anteil" bezeichnet werden.

Ferner hat sich herausgestellt, dass insbesondere der Einsatz von Elastomeren in dem Bindemittel von Vorteil ist. Besonders bevorzugt umfasst, insbesondere besteht, der biologisch abbaubare Anteil des Bindemittels daher aus einem Elastomer, insbesondere aus Kautschuk.

Durch die im hierin aufgeführten und näher spezifizierten Bindemittel kann eine besonders vorteilhafte Formstabilität erreicht werden. Insbesondere kann gegenüber alternativen Bindemitteln, insbesondere gegenüber Styrol-Acrylat-basierten Bindemitteln, die Formstabilität des nicht-thermoplastischen Verbundmaterials bei höherer Temperatur verbessert werden.

Unter Fasermaterial ist insbesondere ein Material zu verstehen, das eine Vielzahl von Fasern aufweist. Vorzugsweise umfasst Fasermaterial im Sinne der vorliegenden Erfindung, bezogen auf das Gesamtgewicht des Fasermaterials, einen Faseranteil von wenigstens 30 Gew.-%, 40 Gew.-%, 50 Gew.-%, 60 Gew.-%, 70 Gew.-%, 80 Gew.-%, 90 Gew.-%, 95 Gew.-%, 99 Gew.-% oder 100 Gew.-%. Das Fasermaterial kann insbesondere eine Vielzahl von miteinander geknickten, gekräuselten, geknäulten, fibrillierten, verzweigten oder verästelten Fasern (oder zwei oder mehr davon) aufweisen. Unter einer Faser ist insbesondere ein lineares Gebilde, insbesondere mit einer Längsform, zu verstehen. Insbesondere ist unter einer Faser ein Gebilde zu verstehen, dessen Längserstreckung deutlich größer, insbesondere wenigstens 3-mal, 5-mal, 10-mal, 20-mal oder 50-mal so groß, wie dessen Radialerstreckung, insbesondere Durchmesser. Vorzugsweise weist eine Faser im Sinne der vorliegenden Erfindung eine Längserstreckung von mindestens 0,1 mm, 0,2 mm, 0,3 mm, 0,4 mm oder 0,5 mm auf. Unter einer Faserform ist insbesondere keine Pulverform zu verstehen und umgekehrt. Im Gegensatz zu einer Faserform zeichnet sich eine Pulverform insbesondere durch ein nicht lineares oder längsförmiges Gebilde, insbesondere durch ein räumliches, insbesondere kugel- oder klumpenförmiges Gebilde aus. Insbesondere zeichnet sich eine Pulverform durch eine im Wesentlichen gleiche Erstreckung in zumindest zwei, vorzugsweise drei, zueinander orthogonale Richtungen aus. Unter im Wesentlich gleich ist insbesondere eine Abweichung von maximal dem 2.5-fachen, 2-fachen, 1.5-fachen oder dem 1-fachen der kleinsten Erstreckung in eine der Richtungen zu verstehen. Insbesondere ist unter einer Pulverform eine Form zu verstehen, dessen größte Erstreckung kleiner ist als 0,1 mm, 0,2 mm, 0,3 mm, 0,4 mm oder 0,5 mm.

Vorzugsweise umfasst das Fasermaterial organisches Fasermaterial. Unter organischem Fasermaterial (Naturfasermaterial oder Naturfasern) ist insbesondere sowohl natürlich gewonnenes als auch natürlich gewinnbares Fasermaterial zu verstehen, wobei auch synthetisch hergestellte Fasern umfasst sind, solange diese auf organischer Basis (natürliche Materialien) beruhen. Das heißt insbesondere Fasermaterial kann bereits in der Natur in faserförmigen Zustand vorkommen (natürlich gewonnen) und/oder es kann durch einen Behandlungsschritt in eine faserige Struktur überführt werden (natürlich gewinnbar). Unter den organischen Materialien sind insbesondere sowohl pflanzliche Fasermaterialien (Pflanzenfasermaterial) als auch tierische Fasermaterialien, wie Lederfasermaterialien, Wollfasermaterialien und Seidenfasermaterialien, geeignet.

Vorzugsweise umfasst wenigstens 10 Gew.-%, 20 Gew.-%, 30 Gew.-%, 40 Gew.-%, 50 Gew.-%, 60 Gew.-%, 70 Gew.-%. 80 Gew.-%, 90 Gew.-%, 95 Gew.-%, oder 99 Gew.-% des Fasermaterials, bezogen auf das Gesamtgewicht des Fasermaterials natürlich gewonnenes Fasermaterial. Insbesondere durch den Einsatz von natürlich gewonnenem Fasermaterial fällt der energieaufwendige Behandlungsschritt zur Herstellung der faserigen Struktur wenigstens teilweise weg, was die ökologische Verträglichkeit des Verbundmaterials steigert.

Es kann vorgesehen sein, dass das Fasermaterial ausgewählt ist aus Naturfasern. Es kann vorgesehen sein, dass das Fasermaterial ausgewählt ist aus der Gruppe bestehend aus, Produktionsrückständen und/oder Sekundärrohstoffen gewonnenes Fasermaterial, Baumwollfasermaterial, Papierfasermaterial, Holzfasermaterial, insbesondere Papierfasermaterial, Fasermaterial der Ordnung Poales, Lederfasermaterial oder Mischungen von zwei oder mehr davon umfasst, insbesondere besteht daraus. Es kann vorgesehen sein, dass das Fasermaterial Lederfasern umfasst oder aus diesen besteht. Beispielsweise können die Lederfasern zerkleinertes Leder und Falzspäne umfassen. Insbesondere können Lederfasern verwendet werden, die bei der Vorgerbung (wet blue, wet white, usw.), dem Crust oder fertigem Leder bei den typischen Arbeitsgängen, insbesondere Falzen, Beschneiden, Spalten, Schleifen, Stanzen, anfallen. Beispielsweise können die Lederfasern von Stanzresten gegerbter Leder, Chromfalzspänen oder Aldehydfalzspänen stammen und/oder beispielsweise auch aus Lederfaserstoffschleifstaub gewonnen werden.

Es kann vorgesehen sein, dass das Lederfasermaterial ausgewählt ist aus der Gruppe bestehend aus Aldehydfalzspänen, Chromfalzspänen und Leder (Lederresten), insbesondere Resten (= Produktionsrückständen) vorgegerbter Häute und/oder Resten von Crust und/oder Resten ausgegerbter Leder und/oder Resten zugerichteter Leder, insbesondere zu wenigstens 10 Gew.-%, 20 Gew.-%, 30 Gew.-%, 40 Gew.-%, 50 Gew.-%, 60 Gew.-%, 70 Gew.-%. 80 Gew.-%, 90 Gew.-%, 95 Gew.-%, 99 Gew.-% oder 100 Gew.-% daraus besteht. Beispielsweise kann das Lederfasermaterial zu wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-% aus diesen bestehen. Es kann aber auch vorgesehen sein, dass das Lederfasermaterial eine Mischung von wenigstens zwei Lederfasermaterialien aufweist, insbesondere ausgewählt aus Leder (Lederresten), Aldehydfalzspäne und Chromfalzspäne. Es kann ferner vorgesehen sein, dass das Lederfasermaterial eine Mischung von drei Lederfasermaterialien aufweist, insbesondere ausgewählt aus Leder (Lederresten), Aldehydfalzspäne und Chromfalzspäne. Insbesondere kann das Lederfasermaterial zwischen 15 und 40 Gew.-%, insbesondere zwischen 20 und 30 Gew.-%, Chromfalzspäne und zwischen 3 und 20 Gew.-%, insbesondere zwischen 8 und 13 Gew.-%, Leder (Lederreste), jeweils bezogen auf das Gesamtgewicht des Verbundmaterials, aufweisen. Alternativ oder zusätzlich zum Leder (Lederresten) kann das Lederfasermaterial zwischen 1 und 10 Gew.-%, insbesondere zwischen 2 und 7 Gew.-%, Aldehydfalzspäne aufweisen. Beispielsweise kann das Lederfasermaterial etwa 25 Gew.-% Chromfalzspäne, 10 Gew.-% Leder und 4 Gew.-% Aldehydfalzspäne aufweisen. Ferner kann vorgesehen sein, dass das Verbundmaterial Lederfaserstoffschleifstaub aufweist. Insbesondere kann das Verbundmaterial Lederfaserstoffschleifstaub zu einem Anteil von höchstens 10 Gew.-%, vorzugsweise höchstens 5 Gew.-%, besonders bevorzugt höchstens 3 Gew.-%, und/oder von wenigstens 0,5 Gew.-%, vorzugsweise wenigstens 1,0 Gew.-% besonders bevorzugt 1,5 Gew.-% oder 2,0 Gew.-%, bezogen auf das Gesamtgewicht des Verbundmaterials, aufweisen. Das zuvor beschriebene Beispiel, mit oder ohne Lederfaserstoffschleifstaub, hat sich als besonders bevorzugt für den Einsatz des Verbundmaterials bei Standardanwendungen herausgestellt. Für den Einsatz im Automobil, beispielsweise für eine Türseitenverkleidung im Fahrzeuginnenbereich, eine Sitzrückenschale im Fahrzeuginnenbereich oder eine Abdeckung im Fahrzeuginnenbereich, hat sich eine Rezeptur mit einem höheren Anteil an Leder (Lederresten) als bevorzugt herausgestellt. Hierfür kann das Lederfasermaterial vorzugsweise zwischen 25 und 50 Gew.-%, insbesondere zwischen 35 und 45 Gew.-%, Leder (Lederreste) und zwischen 1 und 10 Gew.-%, insbesondere zwischen 3 und 8 Gew.-%, Aldehydfalzspäne, jeweils bezogen auf das Gesamtgewicht des Verbundmaterials, aufweisen. Beispielsweise kann hierfür das Lederfasermaterial 41 Gew.-% Leder (Lederreste) und 5 Gew.-% Aldehydfalzspäne, jeweils bezogen auf das Gesamtgewicht des Verbundmaterials, aufweisen. Es hat sich herausgestellt, dass mit den zuvor beschriebenen Anteilen von Leder (Lederresten), Aldehydfalzspäne, Chromfalzspäne und/oder Lederfaserstoffschleifstaub Verbundmaterialien hergestellt werden können, deren mechanische Eigenschaften für die folgend beschriebenen Zwecke ausreichend sind. Dadurch konnte ein Verbundmaterial geschaffen werden, das für eine Vielzahl von Anwendungsgebieten geeignet ist und somit das Entsorgungsproblem von Lederfasermaterialien zumindest zum Teil gelöst werden. Besonders bevorzugt an der Verwendung der zuvor beschriebenen Lederfaserarten, ist, dass diese auf Grund ihrer kurzen Partikelgröße, beispielsweise bei Lederfaserstoffschleifstaub, und/oder ihrer Kontaminierung mit Fremdsubstanzen, beispielsweise bei Chromfalzspänen, vor der vorliegenden Erfindung als besonders minderwertige Materialien angesehen wurden, die nur sehr beschränkt Wiederverwertungsmöglichkeiten fanden. Vorzugsweise liegt ein Hauptfaseranteil von wenigstens 40 Vol.-% des Fasermaterials in einem Faserlängenbereich zwischen 0,2 mm und 2 mm. Vorzugsweise umfasst der Hauptfaseranteil wenigstens 45 Vol.-%, 55 Vol.-%, 60 Vol.-%, 65 Vol.-% oder 70 Vol.-% des Fasermaterials. Insbesondere umfasst der Hauptfaseranteil zwischen 40 Vol.-% und 100 Vol.-%, vorzugsweise zwischen 55 Vol-% und 85 Vol.-%, besonders bevorzugt zwischen 65 Vol.-% und 75 Vol.-%, insbesondere etwa 70 Vol.-%, des Fasermaterials. Es hat sich herausgestellt, dass eine Faserlänge von mindestens 0,2 mm zu den oben genannten Gewichtsprozentangaben dem Verbundmaterial die nötige Festigkeit verleiht, um es für die nachfolgend beschriebenen Einsatzzwecke zu verwenden. Insbesondere kann durch den Hauptanteil von Fasern mit einer Mindestfaserlänge von 0,2 mm eine ausreichende Verhakung des Fasermaterials erzielt werden, um dem Verbundmaterial eine ausreichende Festigkeit und Flexibilität zur Verarbeitung in den nachfolgend beschriebenen Einsatzgebieten zu verleihen. Gleichzeitig ermöglicht die Mindestfaserlänge von 0,2 mm den Bindemittelanteil, bezogen auf das Gesamtgewicht des Verbundmaterials, möglichst gering zu halten, insbesondere unterhalb von 50 Gew.-%, 45 Gew.-%, 40 Gew.-%, 35 Gew.-%, 30 Gew.-% oder 25 Gew.-%, zu halten und somit einen höheren Anteil von $CO_2$ speichernden Fasermaterialien in dem Verbundmaterial zu verwenden.

Insbesondere weist der Hauptfaseranteil einen unteren Hauptfaseranteil mit einem Faserlängenbereich zwischen 0,2 mm und 1,0 mm und einen oberen Hauptfaseranteil mit einem Faserlängenbereich zwischen mehr als 1,0 mm und 2,0 mm auf. Insbesondere liegt der untere Hauptfaseranteil zu wenigstens 40 Vol.-%, 50 Vol.-%, 60 Vol.-% oder 65 Vol.-% des Hauptfaseranteils vor und/oder der obere Hauptfaseranteil zu wenigstens 5 Vol.-%, 10 Vol.-%, 20 Vol.-%, 25 Vol.-%, 30% Vol.-% oder 35 Vol.-% des Hauptfaseranteils vor. Insbesondere beträgt das Volumenverhältnis von unterem Hauptfaseranteil zu oberem Hauptfaseranteil zwischen 1:1 und 3:1, vorzugsweise zwischen 1,3:1 und 2,3:1, besonders bevorzugt zwischen 1,5:1 und 2,0:1. Beispielsweise kann der untere Hauptfaseranteil zu 45 Vol.-% des Fasermaterials und der obere Hauptfaseranteil zu 25 Vol.-% des Fasermaterials vorliegen.

Bezüglich der oberen Grenze des Hauptfaseranteils hat sich herausgestellt, dass Fasern mit dieser Länge nahezu keine Weiterverwendungsmöglichkeit in bekannten Recyclingprodukten finden. Insbesondere für die Papierherstellung und die Garnherstellung sind in der Regel längere Fasern, für Letztere insbesondere mit einer Länge von mehr als 25 mm, erforderlich. Daher konnten insbesondere Kämmlinge, Grundbaumwolle, Kardenrückständen, Schlichtfasern, Reißfasern, Papierfasermaterial und/oder Spelzfasermaterial in dem Faserlängenbereich des Hauptfaseranteils vor der vorliegenden Erfindung kaum wiederverwendet werden. Insofern erschließt die vorliegende Erfindung einen gänzlich neuen Anwendungsbereich für Fasermaterialien, die zuvor den nicht wiederverwertbaren Rückständen zugeführt und kompostiert werden mussten. Insbesondere können deutlich höherwertige Einsatzgebiete für derartige Faserlängenbereiche zwischen 0,2 mm und 2,0 mm erzielt werden als die bisher bekannten, die sich insbesondere auf kurzlebige Produkte wie Putzwolle und Malervlies beschränken.

Insbesondere hat sich eine Mindestfaserlänge von 0,2 mm als vorteilhaft für die erforderliche Verzweigung der Fasern zu einem Faservlies herausgestellt. Es hat sich jedoch auch gezeigt, dass zu lange Fasern dazu neigen Faserklumpen zu bilden, die der Bildung eines homogenen Faservlieses entgegenstehen. In der Papierindustrie wird das Problem der Faserklumpen durch einen sehr dünnflüssigen Faserbrei mit einem Gewichtsverhältnis von Fasermaterial zu Wasser von etwa 1 zu 1000 gelöst. Dies führt zu einem hohen Wasserverbrauch. Auch der zum Trocknen erforderliche Energiebedarf ist auf Grund des hohen Wassergehalts unbefriedigend hoch. Es hat sich herausgestellt, dass durch einen hohen Faseranteil von Fasern mit einer maximalen Faserlänge von maximal 5 mm Verklumpungen mit deutlich geringeren Wassermengen, insbesondere mit einem Gewichtsverhältnis von Fasermaterial zu Wasser zwischen 50 zu 1000 und 100 zu 1000, vermieden werden können. Dadurch kann der Wasserverbrauch um den Faktor 50 bis 100 und damit auch die für das Trocknen erforderliche Energie reduziert werden. Demnach hat es sich als bevorzugt herausgestellt, dass das Verbundmaterial wenigstens 40 Vol.-%, besonders bevorzugt wenigstens 50 Vol.-%, 60 Vol.-%, 70 Vol.-

%,80 Vol.-% oder 90 Vol.-%, noch bevorzugter wenigstens 92 Vol.-%, 94 Vol.-%, 96 Vol.-%, 98 Vol.-%, 99 Vol.-%, 99,5 Vol.-%, 99,7 Vol.-%, 99,9 Vol.-% oder 100 Vol.-% an Fasern mit einer Faserlänge von maximal 5 mm aufweist.

Es hat sich ferner als bevorzugt herausgestellt, dass ein Kurzfaseranteil von wenigstens 5 Vol.%, insbesondere von wenigstens 10 Vol.-%, 15 Vol.-% 20 Vol.-% oder 25 Vol.-%, des Fasermaterials eine Faserlänge von weniger als 0,2 mm aufweist, insbesondere in einem Faserlängenbereich zwischen 0,02 mm und weniger als 0,2 mm liegt. Vorzugsweise beträgt der Kurzfaseranteil höchstens 40 Vol.-%, höchstens 35 Vol.-%, 30 Vol.-% oder 25 Vol.-%, des Fasermaterials. Vorzugsweise weist das Fasermaterial den Kurzfaseranteil zu wenigstens 5 Vol.-% und höchstens 40 Vol.-%, besonders bevorzugt zwischen 10 Vol.-% und 35 Vol.-%, noch bevorzugter zwischen 20 Vol-% und 30 Vol.-%, beispielsweise zu 25 Vol.-%, des Fasermaterials auf. Die Erfinder haben erkannt, dass selbst mit den zuvor beschriebenen Kurzfaseranteilen noch Verbundmaterialien hergestellt werden können, die für die unten beschriebenen Einsatzzwecke geeignet sind. Dadurch kann zumindest ein Anteil von besonders niederwertigem Fasermaterial in dem erfindungsgemäßen Verbundmaterial wiederverwendet werden, was dessen Umweltverträglichkeit erhöht.

Als besonders bevorzugt wurde die Kombination des zuvor beschriebenen Hauptfaseranteils mit dem Kurzfaseranteil erkannt, insbesondere wobei das Volumenverhältnis von Hauptfaseranteil zu Kurzfaseranteil zwischen 1:1 und 5:1, vorzugsweise zwischen 2,0:1 und 3,5:1, besonders bevorzugt zwischen 2,5:1 und 3,1:1, beträgt. Beispielsweise kann der Hauptfaseranteil zu 70 Vol.-% des Fasermaterials und der Kurzfaseranteil zu 25 Vol.-% des Fasermaterials vorliegen.

Es hat sich herausgestellt, dass insbesondere die Kombination aus dem Bindemittel in den nachfolgend beschriebenen Mengenanteilen, dem zuvor definierte Hauptfaseranteil und dem zuvor beschriebenen Kurzfaseranteil ein Verbundmaterial bereitstellt, das einen hohen Anteil an anderweitig kaum wiederverwertbaren Materialien aufweist und für die unten beschriebenen Zwecke geeignet ist

Es hat sich ferner als bevorzugt herausgestellt, dass ein Langfaseranteil von wenigstens 1 Vol.-%, insbesondere von wenigstens 1,5 Vol.-%, 2 Vol.-%, 2,5 Vol.-%, 3 Vol.-%, 3,5 Vol. -%, 4,0 Vol.-% oder 4,5 Vol.-%, des Fasermaterials eine Faserlänge von mehr als 2 mm aufweist, insbesondere in einem Faserlängenbereich zwischen mehr als 2 mm und maximal 5 mm liegt. Insbesondere beträgt der Langfaseranteil höchstens 10 Vol.-%, vorzugsweise höchstens 9 Vol.-%, 8 Vol.-%, 7 Vol.-%, 6 Vol.-% oder 5 Vol.-%. Des Fasermaterials.

Es hat sich herausgestellt, dass Fasern mit einer Länge von mehr als 2 mm das Verbundmaterial weich machen. Die oben beschriebenen Mindestvolumenanteile haben sich hierzu als bevorzugt herausgestellt. Um die zuvor beschriebenen, mit längeren Fasern einhergehenden, Verklumpungen und den damit einhergehenden großen Wasserverbrauch weitestgehend zu vermeiden hat es sich als bevorzugt erwiesen, die oben beschriebenen Maximalvolumenanteile einzuhalten. Des Weiteren hat sich gezeigt, dass die gewünschte Weichheit bereits mit Faserlängen zwischen 2 mm und 4 mm, insbesondere zwischen 2 mm und 3 mm erreichbar ist. Insofern hat es sich als bevorzugt erwiesen, den Langfaseranteil auf Fasern zu beschränken die maximal 5 mm lang sind. Als besonders bevorzugt hat es sich erwiesen, dass wenigstens 50 Vol.-%, 60 Vol.-%, 70 Vol.-%, 80 Vol.-% oder 90 Vol.-% des Langfaseranteils in einem Faserlängenbereich von mehr als 2 mm und maximal 4 mm, bevorzugt maximal 4 mm, liegen und/oder maximal 10 Vol.-%, 8 Vol.-%, 6 Vol.-%, 4 Vol.-%, 2 Vol.-%, 1 Vol.-%, 0,5 Vol.-%, oder o Vol.-% des Langfaseranteils in einem Faserlängenbereich von mehr als 3 mm oder 4 mm und maximal 5 mm liegen. So hat sich Beispielsweise eine Verteilung von etwa 4,5 Vol.-% des Fasermaterials in einem Faserlängenbereich von mehr als 2 mm und maximal 3 mm und von etwa 0,5 Vol.-% des Fasermaterials in einem Faserlängenbereich von mehr als 3 mm und maximal 5 mm als vorteilhaft erwiesen.

Als besonders bevorzugt hat sich die Kombination des zuvor beschriebenen Hauptfaseranteils, des Kurzfaseranteils und/oder des Langfaseranteils herausgestellt. Eine bevorzugte Kombination sieht vor, zwischen 65 und 75 Vol.-% des Fasermaterials durch den Hauptfaseranteil und zwischen 2 und 7 Vol.-% des Fasermaterials durch den Langfaseranteil auszubilden. Eine besonders bevorzugte Kombination sieht vor zwischen 20 und 30 Vol.-% des Fasermaterials durch den Kurzfaseranteil, zwischen 65 und 75 Vol.-% des Fasermaterials durch den Hauptfaseranteil und zwischen 2 und 7 Vol.-% des Fasermaterials durch den Langfaseranteil auszubilden. Beispielsweise können etwa 25 Vol.-% des Fasermaterials durch den Kurzfaseranteil, 70 Vol.-% des Fasermaterials durch den Hauptfaseranteil und 4,5 Vol.-% des Fasermaterials durch den Langfaseranteil ausgebildet werden. Die verbleibenden 0,5 Vol.-% können beispielsweise durch Fasern mit einer Länge von mehr als 3 mm, 4 mm oder 5 mm ausgebildet werden.

Die zuvor beschriebenen Volumenanteile der Faserlängenverteilung können insbesondere mittels dynamischer Bildanalyse, beispielsweise gemäß ISO 13322-2:2006, ermittelt werden. Alternativ können die Volumenteile wie folgt ermittelt werden. In einem ersten Schritt werden die gestreckten Längen der einzelnen Fasern eines Verbundmaterials gemessen und entsprechend den jeweiligen Faserlängenbereichen sortiert. Dies kann entweder vor dem Vermischen des Verbundmaterials mit dem Bindemittel erfolgen oder durch Trennen der Fasern von einem fertigen Verbundmaterial. Anschließend wird die Gesamtheit der Fasern in den jeweiligen Faserlängenbereichen gewogen. Durch Teilen der gewogenen Masse des jeweiligen Faserlängenbereichs durch die Gesamtmasse aller Fasern kann deren Massenanteil berechnet werden. Unter Annahme einer gleichen Dichte für alle Fasern entspricht der Massenanteil dem Volumenanteil. Es sei klar, dass die zuvor und nachfolgend beschriebenen Volumenanteile bzgl. der Faserlängen alternativ auch als Massenanteile realisiert werden können. Insbesondere sollen die beanspruchten Volumenanteile alternativ als Massenanteile beansprucht werden können.

Es kann vorgesehen sein, dass das nicht-thermoplastische Verbundmaterial ferner zumindest ein Additiv umfasst. Es kann vorgesehen sein, dass das Additiv in einer Menge von mindestens 1 Gew.-%, bezogen auf das Gesamtgewicht des nicht-thermoplastischen Verbundmaterials, umfasst ist. Es kann vorgesehen sein, dass das Additiv in einer Menge von mindestens 2 Gew.-%, bezogen auf das Gesamtgewicht des nicht-thermoplastischen Verbundmaterials, umfasst ist. Es kann vorgesehen sein, dass das Additiv in einer Menge von mindestens 5 Gew.-%, bezogen auf das Gesamtgewicht des nicht-thermoplastischen Verbundmaterials, umfasst ist. Es kann vorgesehen sein, dass das Additiv in einer Menge von mindestens 10 Gew.-%, bezogen auf das Gesamtgewicht des nicht-thermoplastischen Verbundmaterials, umfasst ist. Es kann vorgesehen sein, dass das Additiv in einer Menge von mindestens 15 Gew.-%, bezogen auf das Gesamtgewicht des nicht-thermoplastischen Verbundmaterials, umfasst ist.

Es kann vorgesehen sein, dass das Additiv in einer Menge von höchstens 20 Gew.-%, bezogen auf das Gesamtgewicht des nicht-thermoplastischen Verbundmaterials, umfasst ist. Es kann vorgesehen sein, dass das Additiv in einer Menge von höchstens 18 Gew.-%, bezogen auf das Gesamtgewicht des nicht-thermoplastischen Verbundmaterials, umfasst ist. Es kann vorgesehen sein, dass das Additiv in einer Menge von höchstens 15 Gew.-%, bezogen auf das Gesamtgewicht des nicht-thermoplastischen Verbundmaterials, umfasst ist. Es kann vorgesehen sein, dass das Additiv in einer Menge von höchstens 10 Gew.-%, bezogen auf das Gesamtgewicht des nicht-thermoplastischen Verbundmaterials, umfasst ist. Es kann vorgesehen sein, dass das Additiv in einer Menge von höchstens 5 Gew.-%, bezogen auf das Gesamtgewicht des nicht-thermoplastischen Verbundmaterials, umfasst ist. Es kann vorgesehen sein, dass das Additiv in einer Menge von höchstens 3 Gew.-%, bezogen auf das Gesamtgewicht des nicht-thermoplastischen Verbundmaterials, umfasst ist. Es kann vorgesehen sein, dass das Additiv in einer Menge von höchstens 2 Gew.-%, bezogen auf das Gesamtgewicht des nicht-thermoplastischen Verbundmaterials, umfasst ist.

Das Additiv kann ausgewählt sein aus einem anorganischen Salz, einem Konservierungsmittel, einem Farbmittel, einem Gleitmittel, einem Weichmacher, Flammschutzmittel, insbesondere einem halogen-, bor- und antimonfreien Flammschutzmittel, einem Fettungsmittel, einem Gerbstoff, einem Nachgerbstoff, einem Flockungsmittel, einem Fixiermittel, einem Entwässerungshilfsmittel, einem Nassfestmittel, einem Füllstoff oder Mischungen von zwei oder mehr davon.

Es kann vorgesehen sein, dass ein Gemisch von Additiven in dem nicht-thermoplastischen Verbundmaterial umfasst ist, wobei das Gemisch von Additiven einen Gerbstoff, ein Fettungsmittel und ein anorganisches Salz umfasst, etwa in einer Menge von zumindest 90 Gew.-%, bezogen auf das Gesamtgewicht des Gemischs von Additiven, umfasst, vorzugsweise (im Wesentlichen) aus diesem Gemisch besteht.

Insbesondere dann, wenn das Fasermaterial Lederfasern umfasst oder aus diesen besteht kann vorgesehen sein, dass das nicht-thermoplastische Verbundmaterial zumindest ein Additiv umfasst, das ausgewählt ist aus der Gruppe, bestehend aus einem Fettungsmittel, insbesondere einem oder mehreren Triglyceridestern mit langkettigen (> 10 Kohlenstoffatome) gesättigten und/oder einfach oder mehrfach ungesättigten Fettsäuren, wobei die Triglyceridester sowohl pflanzlicher oder tierischer Herkunft sein können, und/oder sulfatierter natürlicher Öle. Es kann hierbei vorgesehen sein, dass das Gewichtsverhältnis von Fasermaterial zu Fettungsmittel eines ist, das ausgewählt ist aus der Gruppe, bestehend aus 2:1 bis 10:1; 3:1 bis 8:1; 4:1 bis 7:1; 5:1 bis 6:1; insbesondere etwa 5,5:1; beispielsweise etwa 5,54:1.

Beispielsweise dann, wenn das Fasermaterial Lederfasern umfasst oder aus diesen besteht, kann vorgesehen sein, dass der Gerbstoff oder Nachgerbstoff ein als (Nach-) Gerbstoff-geeignetes Planzenextrakt ist, beispielsweise ein Quebracho-Extrakt ist. Es kann hierbei vorgesehen sein, dass das Gewichtsverhältnis von Fasermaterial zu (Nach)gerbstoff eines ist, das ausgewählt ist aus der Gruppe, bestehend aus 2:1 bis 12:1; 3:1 bis 10:1; 4:1 bis 9:1; 5:1 bis 8:1; 6:1 bis 7:1; insbesondere etwa 6,7:1; beispielsweise etwa 6,66:1.

Insbesondere dann, wenn das Fasermaterial Lederfasern umfasst oder aus diesen besteht, kann vorgesehen sein, dass das anorganische Salz ein Koaguliermittel, beispielsweise Aluminiumsulfat, ist. Es kann hierbei vorgesehen sein, dass das Gewichtsverhältnis von Fasermaterial zu anorganischem Salz eines ist, das ausgewählt ist aus der Gruppe, bestehend aus 2:1 bis 20:1; 3:1 bis 15:1; 5:1 bis 12:1; 6:1 bis 11:1; 7:1 bis 10:1; beispielsweise 7,21:1 bis 9,91:1.

Durch den Einsatz von Elastomeren als Bindemittel kann dem Verbundmaterial insbesondere ein elastisches Verhalten verliehen werden. Dies ist insbesondere bei Ausführungsformen, wie Hinterkappen und Taschen, von Vorteil, bei denen gewünscht ist, dass Sie nach einer Verformung wieder in den ursprünglichen Zustand zurückkehren. Das Maß an Elastizität, das bei derartigen Anwendungen gefordert wird kann insbesondere als sprungelastisch bezeichnet werden. Bei dem Einsatz des Verbundmaterials für Ummantelungen, Kaschierungen und/oder Belegen kann eine zu hohe Elastizität jedoch zu Problemen bei dem Verarbeiten des Verbundmaterials an scharfen Kanten führen. An diesen kann ein zu elastisches Verbundmaterial zurückspringen, sodass kein enger Verlauf des Verbundmaterials entlang der Kante gewährleistet werden kann. Es wurde erkannt, dass dieses Problem durch die Zugabe eines Weichmachers, d.h. durch die Verwendung eines Weichmachers als Additiv in dem nicht-thermoplastischen Verbundmaterial, gelöst werden kann. Insofern ist es insbesondere beim Einsatz des Verbundmaterials für Ummantelungen, Kaschierungen und/oder Belegen vorteilhaft einen Weichmacher einzusetzen. Dadurch kann ein knetartiges Verformungsverhalten bereitgestellt werden, wodurch das Verbundmaterial eng entlang von scharfen Kanten verlaufen kann. Ein derartiges elastisches Verhalten kann insbesondere als elastoplastisch bezeichnet werden. Dadurch kann das Einsatzgebiet des Verbundmaterials signifikant erhöht werden. Vorzugsweise wird als Weichmacher ein Fettungsmittel, insbesondere in Art und/oder Menge wie zuvor beschrieben, eingesetzt.

Als Farbmittel kann beispielsweise ein schwarzes Farbmittel, etwa eine Rußpigmentdispersion, oder ein Farbstoff, beispielsweise ein gelber oder ein oranger Farbstoff, vorgesehen sein.

Flammschutzmittel lassen sich im Allgemeinen nach deren Wirkungsweise in chemische und physikalische Prinzipien unterteilen, gemäß der vorliegenden Erfindung werden Flammschutzmittel eingesetzt, die durch einen oder mehrere chemische und/oder physikalische Prozesse den flammhemmenden Wirkungseffekt erzeugen. Beispielsweise handelt es sich bei dem Flammschutzmittel um ein additives Flammschutzmittel, das auch als Brandhemmer bezeichnet werden kann, ein reaktives Flammschutzmittel, ein inhärentes Flammschutzmittel oder ein sogenannter Coating, der als Beschichtung von außen nach Wirkungsweise eines Brandhemmers aufgebracht wird. Als Flammschutzmittel kann insbesondere ein Flammschutzmittel ausgewählt aus der Gruppe bestehend aus Blähgraphit, Aluminiumhydroxid, roter Phosphor, Magnesiumhydroxid, insbesondere plättchenförmiges Silikat, insbesondere Vermiculit, ein Phosphat, insbesondere Aluminiumphosphat, ein Polyphosphat, insbesondere Aluminiumpolyphosphat oder Ammoniumpolyphosphat, oder Mischung von zwei oder mehr davon verwendet werden, beispielsweise Blähgraphit, roter Phosphor, Aluminiumhydroxid oder Mischungen von zwei oder mehr davon vorgesehen sein.

Insbesondere dann, wenn das Fasermaterial Papierfasern umfasst oder aus diesen besteht kann vorgesehen sein, dass das nicht-thermoplastische Verbundmaterial zumindest ein Additiv umfasst, das ausgewählt ist aus der Gruppe, bestehend aus einem Flockungsmittel, einem Fixiermittel, einem Entwässerungshilfsmittel, einem Füllstoff und einem Nassfestmittel, insbesondere ausgewählt aus Polyamin-Epichlorhydrin-Harze, Harnstoff- oder Melamin-Formaldehyd-Harze und vernetzte Aldehyde wie glyoxylierte Polyacrylamide. Handelsnamen für geeignete Nassfestmittel sind GILUTON, LURESIN KS, QUIMEX 8015, AMRES ULTRA 25. Insbesondere nassfeste Papiere, wie die gemäß EN 643 den Klassen 5.05.00, 5.05.01, 5.06.00, 5.06.01, 5.07.00 und 5.07.01 zugeordneten Papiere, können auf Grund der darin eingesetzten Nassfestmittel nicht als Recyclingpapier wiederverwendet werden. Denn die darin verwendeten Nassfestmittel können mit dem für die Papierindustrie klassischem Aufschlagen nicht oder nur unter hohem Reinigungsaufwand und/oder Ausscheidungsmengen in eine homogene Faserpulpe überführt werden. Dies wird auch als fehlende Repulpierbarkeit bezeichnet. Es hat sich gezeigt, dass dieses Problem durch Zerfasern, beispielsweise durch den/die zuvor und nachfolgend beschriebene/n Refiner und/oder Schneidmühle gelöst werden kann. Dadurch ermöglicht das vorliegende Verbundmaterial die Wiederverwertung von nassfestem Papier. Vorzugsweise umfasst das Papierfasermaterial daher aus nassfestem Papier wiedergewonnenes Fasermaterial. Insbesondere lässt sich dies in dem Verbundmaterial durch das Vorhandensein von Nassfestmitteln nachweisen. Insbesondere weist das Verbundmaterial Nassfestmittel auf.

Die Erfindung betrifft ferner ein Verfahren zur Herstellung eines Verbundmaterials umfassend:

(i) Bereitstellen eines Gemischs, das das Fasermaterial, optional zumindest eines Additivs und Wasser umfasst;

(ii) Zugeben des Bindemittels und optional des zumindest einen Additivs zu dem in Schritt (i) erhaltenen Gemisch; und

(iii) Trocknen des in Schritt (ii) erhaltenen Gemischs.

Das Fasermaterial, das zumindest eine Additiv, das in Schritt (i) und/oder Schritt (ii) verwendet wird, und das Bindemittel können jeweils eines (oder mehrere) der im Vorangehenden im Detail beschriebenen Fasermaterialien, Additive und Bindemittel sein.

Es kann vorgesehen sein, dass in dem erfindungsgemäßen Verfahren das Bereitstellen des Gemischs, das das Fasermaterial, optional zumindest eines oder mehrere der im vorangehenden beschriebenen Additiv(e) und Wasser umfasst, im Schritt (i) des Verfahrens, das Herstellen des Fasermaterials durch Zerkleinern eines Basismaterials, vorzugsweise eines Ledermaterials, umfasst. Das Basismaterial (etwa Leder und/oder Falzspäne) kann hierbei im trockenen Zustand zerkleinert werden, um ein Fasermaterial zu erhalten.

Es kann vorgesehen sein, dass das so erhaltene Fasermaterial (oder ein auf anderem Wege erhaltenes geeignetes Fasermaterial) und das eine oder mehrere Additive(e), soweit vorhanden, mit Wasser in einer geeigneten Mischvorrichtung, beispielsweise einer Bütte, vermengt (verdünnt) werden. Das Gewichtsverhältnis von Wasser zu Fasermaterial kann hierbei eines sein, das aus der Gruppe ausgewählt ist, bestehend aus 5:1 bis 25:1, 8:1 bis 20:1, 10:1 bis 16:1 und 11:1 bis 15:1, beispielsweise 11.25 bis 14.45.

Das Gemisch, das in Schritt (i) erhalten wird, kann ein Stoffbrei sein, der durch gemeinsames Mahlen des Fasermaterials, falls vorhanden des Additivs und des Wassers, beispielsweise mittels eines Refiners, etwa eines Scheiben- oder Kegelrefiners, erhalten werden kann.

Das in Schritt 1 erhaltene Gemisch wird mit dem Bindemittel und optional mit einem oder mehreren der im vorangehenden beschriebenen Additive, versetzt, beispielsweise chargenweise versetzt.

Es kann vorgesehen sein, dass ein Gewichtsverhältnis von Fasermaterial zu Bindemittel in einem Bereich zwischen 1:1 bis 3:1, besonders bevorzugt zwischen 1:1 bis 2.5:1, insbesondere 2:1 bis 1,1:1 ist. Als Bindemittel kann eines oder mehrere der im Vorangehenden im Detail beschriebenen Bindemittel, etwa ein Bindemittel, das ein Polyalkylacrylat umfasst, verwendet werden. Es kann vorgesehen sein, dass das Bindemittel in Form einer Suspension, Dispersion, Emulsion etc. zugegeben wird, beispielsweise in Form einer Emulsion, die das Bindemittel und ein geeignetes Emulsionsmittel, mit einem Feststoffgehalt von 40 bis 60 Gew.-%, insbesondere 43.5 bis 55 Gew.-%, beispielsweise 43.5 Gew.-% bis 44.5 Gew.-%, umfasst.

Es kann vorgesehen sein, dass das Fettungsmittel, eines ist (oder ein solches umfasst), das aus der Gruppe ausgewählt ist, bestehend aus einem oder mehreren Triglyceridestern mit langkettigen (> 10 Kohlenstoffatome) gesättigten und/oder einfach oder mehrfach ungesättigten Fettsäuren, wobei die Triglyceridester sowohl pflanzlicher oder tierischer Herkunft sein können, und/oder sulfatierter natürlicher Öle. Es kann hierbei vorgesehen sein, dass das Gewichtsverhältnis von Fasermaterial zu Fettungsmittel eines ist, das aus der Gruppe ausgewählt ist, bestehend aus 2:1 bis 10:1; 3:1 bis 8:1; 4:1 bis 7:1; 5:1 bis 6:1; insbesondere etwa 5,5:1; beispielsweise etwa 5,54:1.

Es kann vorgesehen sein, dass der Gerbstoff ein vegetabiler Gerbstoff, etwa ein als (Nach-) Gerbstoff-geeignetes Planzenextrakt ist, beispielsweise ein Quebracho-Extrakt, ist. Es kann hierbei vorgesehen sein, dass das Gewichtsverhältnis von Fasermaterial zu Gerbstoff eines ist, das aus der Gruppe ausgewählt ist, bestehend aus 2:1 bis 12:1; 3:1 bis 10:1; 4:1 bis 9:1; 5:1 bis 8:1; 6:1 bis 7:1; insbesondere etwa 6,7:1; beispielsweise etwa 6,66:1.

Insbesondere dann, wenn das Fasermaterial Lederfasern umfasst oder aus diesen besteht, kann vorgesehen sein, dass das anorganische Salz Aluminiumsulfat ist. Es kann hierbei vorgesehen sein, dass das Gewichtsverhältnis von Fasermaterial zu anorganischem Salz eines ist, das aus der Gruppe ausgewählt ist, bestehend aus 2:1 bis 20:1; 3:1 bis 15:1; 5:1 bis 12:1; 6:1 bis 11:1; 7:1 bis 10:1; beispielsweise 7,21:1 bis 9,91:1.

Es kann vorgesehen sein, dass das in Schritt (ii) erhaltene Gemisch vor dem Schritt (iii) für einen Zeitraum von mindestens etwa zwei Stunden gerührt wird.

Das Trocknen des in Schritt (ii) erhaltenen Gemischs, d.h. Schritt (iii) des Verfahrens, kann einen Schritt des Entwässerns umfassen. Das Entwässern kann insbesondere durch Aufbringen des in Schritt (ii) erhaltenen Gemischs auf ein Siebband durchgeführt werden. Der Entwässerungsprozess kann durch Anlegen eines Vakuums, durch Abpressen und andere geeignete Verfahrensschritte unterstützt werden.

Das Trocknen des in Schritt (ii) erhaltenen Gemischs, d.h. Schritt (iii) des Verfahrens, kann einen Trocknungsschritt bei erhöhter Temperatur umfassen, insbesondere einen Trocknungsschritt bei erhöhter Temperatur, der dem Entwässern nachgelagert ist. Der Trocknungsschritt bei erhöhter Temperatur kann durch Zufuhr von Warmluft durchgeführt werden, um das zu trocknende Gemisch auf eine Temperatur von beispielsweise 50 bis 100°C, etwa 80 °C, zu erhitzen.

Die Erfindung betrifft ferner ein Erzeugnis umfassend das nicht-thermoplastische Verbundmaterial wie hierin beschrieben.

Das Erzeugnis kann vorzugsweise ein Lederfaserstoff ein Überzugsmaterial für Türseitenverkleidung im Fahrzeuginnenbereich, eine Sitzrückenschale im Fahrzeuginnenbereich, eine Abdeckung im Fahrzeuginnenbereich, ein Produkt zur Ausstattung von Verkehrsmitteln, eine Schuhkomponente, insbesondere eine Hinterkappe, ein Absatz, eine Laufsohle und eine Brandsohle, ein Modeaccessoire, oder ein Bauprodukt sein.

Die Erfindung betrifft ferner die Verwendung des nicht-thermoplastischen Verbundmaterials wie hierin beschrieben zur Herstellung von Überzugsmaterial für Türseitenverkleidung im Fahrzeuginnenbereich, als Sitzrückenschalen, im Fahrzeuginnenbereich, als Abdeckungen zur Herstellung von Bezügen, insbesondere Kissen- und Sitzbezügen, insbesondere für Sitze im Fahrzeuginnenbereich, in Produkten zur Ausstattung von Verkehrsmitteln, von in Schuhkomponenten, insbesondere Hinterkappen, Absätzen, Lauf- und Brandsohlen, von in Modeaccessoires und/oder in Bauprodukten.

Gemäß einem weiteren Aspekt der vorliegenden Erfindung, der mit den vorhergehenden Aspekten und beispielhaften Ausführungen kombinierbar ist, ist ein flächiges, insbesondere bahnförmiges, Erzeugnis bereitgestellt, welches ein Verbundmaterial gemäß einem der zuvor beschriebenen Aspekte beziehungsweise einer der zuvor beschriebenen beispielhaften Ausführungen aufweist. Insbesondere ist das bahnförmige, flächige Erzeugnis aus einem insbesondere erfindungsgemäßen Verbundmaterial gemäß einer der zuvor beschriebenen Ausführungen hergestellt.

Vorzugsweise beträgt der Anteil des Verbundmaterials in dem Erzeugnis wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-%, 99 Gew.-% oder 100 Gew.-% des Erzeugnisses.

Unter einem flächigen Erzeugnis ist insbesondere ein Erzeugnis zu verstehen, dessen Längsstreckung und Breitenerstreckung deutlich größer ist als dessen Höhenerstreckung. Unter deutlich größer ist insbesondere zu verstehen, dass die Längserstreckung und/oder die Breitenerstreckung um wenigstens das dreifache, fünffache, zehnfache, zwanzigfache, dreißigfache oder fünfzigfache größer ist als die Breitenerstreckung. Insbesondere definiert die Längserstreckung und die Breitenerstreckung des flächigen Erzeugnisses eine planare Oberfläche des Erzeugnisses, die gebogen oder gerade sein kann. Insbesondere kann das flächige Erzeugnis ein bahnförmiges Erzeugnis sein. Unter einem bahnförmigen Erzeugnis ist insbesondere ein flächiges Erzeugnis zu verstehen, dessen Längserstreckung größer, insbesondere wenigstens doppelt so groß, dreifach so groß, fünffach so groß oder zehnfach so groß, ist als dessen Breitenerstreckung. Die Längserstreckung des bahnförmigen Erzeugnisses kann auch als Bahnerstreckung bezeichnet werden. Die Bahnerstreckung kann insbesondere endlos sein. Insbesondere kann ein bahnförmiges Erzeugnis auf eine Rolle gewickelt sein. Alternativ kann ein bahnförmiges Erzeugnis in Platten geschnitten werden. Insbesondere kann das Erzeugnis eine Faserbahn sein. Unter einer Faserbahn ist insbesondere ein Erzeugnis zu verstehen, das an sich gegenüberliegenden Oberflächen, insbesondere der sich gegenüberliegenden planaren Oberflächen und/oder sich gegenüberliegender Kanten, Fasermaterial aufweist. Insbesondere ist unter einer Faserbahn ein Erzeugnis zu verstehen, das von Fasermaterial durchsetzt ist und/oder in dem das Fasermaterial homogen verteilt ist. Unter "durchsetzt" ist insbesondere zu verstehen, dass sich das Fasermaterial entlang der gesamten Dicke, Länge und/oder Breite des Erzeugnisses verteilt, insbesondere homogen verteilt.

Die Höhenerstreckung des flächigen Erzeugnisses kann auch als Stärke bezeichnet werden. Vorzugsweise umfasst das flächige Erzeugnis eine Stärke zwischen 0,2 mm und 7 mm, besonders bevorzugt zwischen 0,3 mm und 5 mm, insbesondere zwischen 0,5 mm und 3 mm. Alternativ oder zusätzlich weist das Erzeugnis eine Stärke von wenigstens 0,3 mm, 0,5 mm oder 1 mm und/oder von höchstens 10 mm, 8 mm, 7 mm, 6 mm, 5 mm, 4 mm oder 3 mm auf.

Vorzugsweise weist das Erzeugnis bei der Verwendung als Beschichtung, insbesondere von Paneelen, oder als Belag, insbesondere Tapete, eine Stärke zwischen 0,2 mm und 5 mm, insbesondere 0,3 mm und 3 mm, besonders bevorzugt zwischen 0,5 mm und 1 mm auf. Alternativ dazu weist das Erzeugnis insbesondere bei der Verwendung zur Herstellung von Überzugsmaterial, insbesondere von Kissenbezügen, Sitzbezügen, Abdeckungen von Sitzrückschalen und Modeaccessoires insbesondere eine Stärke zwischen 0,5 mm und 2 mm, vorzugsweise zwischen 0,8 mm und 1,4 mm auf. Alternativ dazu weist das Erzeugnis insbesondere bei dessen Verwendung für Hinterkappen eine Stärke zwischen 0,5 mm und 3 mm, vorzugsweise zwischen 0,8 mm und 2,5 mm auf. Bei Lauf- und Brandsohlen weist das Erzeugnis insbesondere eine Stärke zwischen 1,5 mm und 5 mm, vorzugsweise zwischen 1,8 mm und 4 mm, auf. Bei Rahmen und Absätzen weist das Erzeugnis insbesondere eine Stärke zwischen 1 mm und 8 mm, vorzugsweise zwischen 2 mm und 7 mm auf. Bei Wandelementen, wie Raumtrennern, weist das Erzeugnis insbesondere eine Stärke zwischen 2 mm und 8mm, zwischen 3 mm und 7 mm, zwischen 4 mm und 6 mm, beispielsweise etwa 5 mm auf.

Vorzugsweise ist das Erzeugnis ausgewählt aus einem aus der Gruppe bestehend aus Erzeugnissen mit einer Stärke von etwa 0,5 mm und einer gemäß DIN 53121 gemessenen Biegekraft von weniger als 250 mN, einer Stärke von etwa 1,0 mm und einer gemäß DIN 53121 gemessenen Biegekraft von weniger als 1100 mN, einer Stärke von etwa 1,5 mm und einer gemäß DIN 53121 gemessenen Biegekraft von weniger als 3400 mN, einer Stärke von etwa 2,0 mm und einer gemäß DIN 53121 gemessenen Biegekraft von weniger als 7100 mN, einer Stärke von etwa 3,0 mm und einer gemäß DIN 53121 gemessenen Biegekraft von weniger als 18000 mN, einer Stärke von etwa 4,0 mm und einer gemäß DIN 53121 gemessenen Biegekraft von weniger als 31000 mN, einer Stärke von etwa 5,0 mm und einer gemäß DIN 53121 gemessenen Biegekraft von weniger als 41000 mN, einer Stärke von etwa 6,0 mm und einer gemäß DIN 53121 gemessenen Biegekraft von weniger als 50000 mN oder einer Stärke von etwa 7,0 mm und einer gemäß DIN 53121 gemessenen Biegekraft von weniger als 60000 mN. Die Biegekraft wird insbesondere bei folgenden Bedingungen ermittelt: Biegewinkel 7°; Biegegeschwindigkeit 6,0 °/s; Vorkraft 0,02 N; Biegelänge 10,0 mm; Probenbreite 30,0 mm. Die gemessene Biegekraft beträgt jeweils vorzugsweise wenigstens 30 %, 40 %, 50 %, 55 %, 60 % oder 65 % des zuvor genannten Maximalwertes. Unter "etwa" ist insbesondere eine Stärke von ± 0,05 mm, ± 0,1 mm, ± 0,15 mm, ± 0,25 mm, ± 0,3 mm, ± 0,4 mm oder ± 0,5 mm der angegebenen Stärke zu verstehen. Es hat sich herausgestellt, dass die genannte Biegsamkeit in Abhängigkeit der Plattenstärke für die zuvor genannten Einsatzgebiete von Vorteil sind, insbesondere einen guten Kompromiss aus ausreichender Biegsamkeit für Lagerung, Transport und Verarbeitung einerseits und einen ausreichenden Wiederstand gegen Verbiegung im Nutzungszustand andererseits darstellen.

In einer bevorzugten Ausführung ist das Erzeugnis von dem Flammschutzmittel durchsetzt, insbesondere gleichmäßig durchsetzt, insbesondere im Wesentlichen homogen in dem Verbundmaterial verteilt. Unter durchsetzt ist insbesondere zu verstehen, dass das Flammschutzmittel im Wesentlichen homogen in dem Verbundmaterial und/oder dem Erzeugnis verteilt ist. Im Gegensatz zu Erzeugnissen, bei denen das Flammschutzmittel, lediglich auf die Oberfläche des Erzeugnisses aufgetragen wird, wird dadurch sichergestellt, dass auch an den Schnittflächen des Erzeugnisses, das durch das Blähgraphit bereitgestellte Glänzen sichtbar ist. Ferner wird erreicht, dass der Flammschutz unabhängig von der Ausrichtung des Erzeugnisses bereitgestellt werden kann. Insbesondere können so zum Beispiel beidseitig verwendbare Tapeten aus dem Verbundmaterial gebildet werden, die, unabhängig von der im angebrachten Zustand dem Raum zugewandten Seite, gleichermaßen einen Flammschutz bereitstellen. Alternativ oder zusätzlich kann das Erzeugnis ein Raumteiler sein, der von dem Flammschutzmittel durchsetzt ist, sodass das Flammschutzmittel an den, insbesondere beiden, dem Raum zugewandten Seiten des Raumteilers einen Flammschutz bereitstellt und/oder, insbesondere beim Einsatz von Blähgraphit, eine glitzernde Oberfläche aufweist.

Vorzugsweise weist wenigstens eine Oberfläche des Erzeugnisses eine Beschichtung auf. Insbesondere ist die Beschichtung eine Farbschicht und/oder eine Schutzschicht, die insbesondere Polyurethan oder Polyacrylat aufweist. Alternativ oder zusätzlich ist die Oberfläche geprägt. Durch derartige Beschichtungen kann insbesondere die Oberfläche des Erzeugnisses veredelt werden, was dessen Anwendungsgebiete nochmals deutlich erweitert. Insbesondere kann beispielsweise durch eine Marmorierung der Oberfläche eine lederähnliche Optik erzeugt werden.

Die Erfindung betrifft ferner die Verwendung des erfindungsgemäßen Verbundmaterials oder des zuvor beschriebenen Erzeugnisses zur

- Beschichtung, insbesondere Ummantelung oder Kaschierung, insbesondere von

  - Paneelen, wie Wandpaneelen, Bodenpaneelen, Deckenpaneelen oder Fensterrahmenpaneelen, insbesondere im Bereich von Fahrzeuginnenräumen, Wohnräumen und Gewerberäumen, oder von

  - Einrichtungs- und Gebrauchsgegenständen, wie Möbeln, Dekorationen, Elektrogeräten und Handtaschen, insbesondere in der Modeindustrie, und/oder

- zur Herstellung von

  - Belägen, wie Wandbelägen, insbesondere Tapeten, Bodenbelägen, Deckenbelägen, Fensterbelägen oder Türseitenverkleidungen insbesondere im Bereich von Fahrzeuginnenräumen, Wohnräumen und Gewerberäumen, von

  - Wandelementen, wie Raumtrennern, insbesondere im Bereich von Fahrzeuginnenräumen, Wohnräumen und Gewerberäumen, von

  - Überzugsmaterial, wie Kissenbezüge, Sitzbezüge oder Abdeckungen, insbesondere von Sitzrückenschalen, insbesondere im Fahrzeuginnenbereich, von

  - Schuhkomponenten, insbesondere Hinterkappen, Absätzen, Lauf- und Brandsohlen, und/oder von

  - Modeaccessoires, Produkte zur Ausstattung von Verkehrsmitteln oder Bauprodukten.

Ferner betrifft die Erfindung für die zuvor beschriebenen Verwendungen hergestellte Erzeugnisse und/oder Beschichtungen.

Insbesondere bei Beschichtungen, Belägen und/oder Überzugsmaterial, insbesondere von Einrichtungs- und Gebrauchsgegenständen, kann die Prägung der Oberfläche, zur Erzeugung einer lederähnlichen Optik, insbesondere in der Modeindustrie, vorteilhaft sein. Alternativ oder zusätzlich kann eine Textil-Prägung eingesetzt werden, die dem Erzeugnis insbesondere eine textilähnliche Optik, beispielsweise die eines Gewebes, verleiht. Alternativ oder zusätzlich kann eine technische Prägung, beispielsweise eine Carbonprägung, eingesetzt werden, die dem Erzeugnis die Optik eines Hochleistungsmaterials, wie Carbon, verleiht. Im Gegensatz dazu kann insbesondere bei der Ummantelung oder Kaschierung in Gewerberäumen das Verzichten auf eine Prägung sinnvoll sein, um den durch den Einsatz der Pflanzenfasern erzeugten "vegane", also pflanzenbasierten Eindruck nicht zu beeinträchtigen.

Weiterhin wird die Aufgabe der Erfindung gelöst durch die nachfolgenden speziellen Ausführungsformen.

Die hier beschriebenen speziellen Ausführungsformen sind vorzugsweise beliebig miteinander und beliebig mit anderen Merkmalen oder Merkmalen der vorangehenden allgemeinen Offenbarung der Erfindung kombinierbar.

Die Aufgabe der Erfindung wird vorzugsweise gelöst durch ein nicht-thermoplastisches Verbundmaterial, umfassend:

(i) 25 bis 80 Gew.-% Fasermaterial, bezogen auf das Gesamtgewicht des nicht-thermoplastischen Verbundmaterials; und

(ii) 10 bis 50 Gew.-% eines Bindemittels, bezogen auf das Gesamtgewicht des nicht-thermoplastischen Verbundmaterials.

In speziellen bevorzugten Ausführungsformen umfasst das Verbundmaterial:

(i) 25 bis 80 Gew.-% Fasermaterial, bezogen auf das Gesamtgewicht des nicht-thermoplastischen Verbundmaterials; und

(ii) 10 bis 50 Gew.-% eines Bindemittels, bezogen auf das Gesamtgewicht des nicht-thermoplastischen Verbundmaterials;

wobei das Bindemittel ein Polyalkylacrylat umfasst.

In speziellen bevorzugten Ausführungsformen bildet das Bindemittel in dem nicht-thermoplastischen Verbundmaterial keine durchgängige Phase.

In speziellen bevorzugten Ausführungsformen sind Fasermaterial und Bindemittel derart aufeinander abgestimmt, dass das Bindemittel in dem nicht-thermoplastischen Verbundmaterial keine durchgängige Phase bildet, beispielsweise das nicht-thermoplastische Verbundmaterial ein, bindemittelgebundener, d.h. etwa ein polymergebundener Vliesstoff ist. Dadurch kann insbesondere vermieden werden, dass das nicht-thermoplastische Verbundmaterial sich bei, insbesondere unbeabsichtigter, Erwärmung plastisch verformt. Insbesondere kann das Bindemittel eine Glasübergangstemperatur von weniger als 20°C aufweisen.

Das erfindungsgemäße Verbundmaterial zeichnet sich dadurch aus, dass es kein thermoplastisches Verhalten aufweist, also unter Wärmeeinfluss nicht (bzw. nicht wesentlich) plastisch verformbar ist (erweicht). Ebenso nimmt die Bruchdehnung des erfindungsgemäßen nicht-thermoplastischen Verbundmaterials unter Wärmeeinfluss nicht zu sondern ab. Dies bedeutet insbesondere, dass thermoplastische Effekte für das erfindungsgemäße nicht-thermoplastische Verbundmaterial auf makroskopischer Ebene nicht beobachtet werden können.

In speziellen Ausführungsformen wird das nicht-thermoplastische Verhalten des nicht-thermoplastischen Verbundmaterials dadurch erreicht, dass das nicht-thermoplastische Verbundmaterial eine Konzentration von 25 bis 80 Gew.-% Fasermaterial, bezogen auf das Gesamtgewicht des nicht-thermoplastischen Verbundmaterials; und eine Konzentration von 10 bis 50 Gew.-% eines Bindemittels, bezogen auf das Gesamtgewicht des nicht-thermoplastischen Verbundmaterials umfasst. In speziellen Ausführungsformen wird das nicht-thermoplastische Verhalten des nicht-thermoplastischen Verbundmaterials dadurch erreicht, dass das nicht-thermoplastische Verbundmaterial durch ein in dieser Schrift offenbartes Herstellungsverfahren hergestellt wird. In speziellen Ausführungsformen wird das nicht-thermoplastische Verhalten des nicht-thermoplastischen Verbundmaterials dadurch erreicht, dass das Bindemittel in dem erfindungsgemäßen nicht-thermoplastischen Verbundmaterial nicht in einer durchgängigen Phase vorhanden ist.

In speziellen Ausführungsformen liegt das Bindemittel nicht als eine im wesentlichen monolithische Struktur (Matrix) vor, in der das Fasermaterial eingebettet ist. Vielmehr ist in diesen bevorzugten Ausführungsformen das Bindemittel in dem nicht-thermoplastischen Verbundmaterial in einer Vielzahl diskreter, d.h. räumlich voneinander getrennter Abschnitte vorhanden. Hierdurch wird insbesondere eine verbesserte Temperaturbeständigkeit des Verbundmaterials gegenüber bekannten, insbesondere thermoplastischen Verbundmaterialien erreicht.

Die Gesamtemission und/oder die TVOC-Emission des nicht-thermoplastischen Verbundmaterials können in speziellen Ausführungsformen entweder durch die Auswahl geeigneter Bestandteile, insbesondere eines geeigneten Bindemittels, etwa durch ein geeignetes Herstellungsverfahren desselben, und geeigneter Additive, erreicht werden. Es kann in speziellen Ausführungsformen etwa vorgesehen sein, dass zum Zweck der Emissionsreduktion ein Bindemittel mit einem geringen Anteil an Restmonomer(en) und/oder anderen Emittenten verwendet wird.

Alternativ kann die Gesamtemission und/oder die TVOC-Emission des nicht-thermoplastischen Verbundmaterials dadurch erreicht werden, dass entweder das nicht-thermoplastische Verbundmaterial oder ein oder mehrerer Materialien, die zur Herstellung des nicht-thermoplastischen Verbundmaterials verwendet werden, einer chemischen oder physikalischen Reinigungs- und Desodorierungsprozedur unterworfen wurden. Geeignete chemische oder physikalische Reinigungs- und Desodorierungsprozeduren sind etwa eine Nachpolymerisation, ein Steam-Stripping- oder Gas-stripping-Schritt oder eine Membranfiltration oder Kombinationen daraus. Ein entsprechendes Verfahren ist etwa aus der EP 0 967 232 A1 bekannt.

In speziellen bevorzugten Ausführungsformen ist das ethylenisch ungesättigte Monomer mit zumindest einer Carbonsäureestergruppe ein Alkylacrylat. In speziellen bevorzugten Ausführungsformen ist das Alkylacrylat ein $C_1$ bis $C_{12}$-Alkylacrylat In speziellen bevorzugten Ausführungsformen ist das Alkylacrylat ein $C_1$ bis $C_{10}$-Alkylacrylat. In speziellen bevorzugten Ausführungsformen ist das Alkylacrylat ein $C_1$ bis $C_8$-Alkylacrylat. In speziellen bevorzugten Ausführungsformen ist das Alkylacrylat ein $C_2$ bis $C_6$-Alkylacrylat. In speziellen bevorzugten Ausführungsformen ist das Alkylacrylat ein $C_3$ bis $C_5$-Alkylacrylat. In speziellen bevorzugten Ausführungsformen ist das Alkylacrylat ein $C_4$-Alkylacrylat (Polybutylacrylat).

In speziellen bevorzugten Ausführungsformen ist das ethylenisch ungesättigte Monomer mit zumindest einer Carbonsäureestergruppe ein Alkylmethacrylat. In speziellen bevorzugten Ausführungsformen ist das Alkylmethacrylat ein $C_1$ bis $C_{12}$-Alkylmethacrylat. In speziellen bevorzugten Ausführungsformen ist das Alkylmethacrylat ein $C_1$ bis $C_{10}$-Alkylmethacrylat. In speziellen bevorzugten Ausführungsformen ist das Alkylmethacrylat ein Poly-$C_1$ bis $C_8$-Alkylmethacrylat. In speziellen bevorzugten Ausführungsformen ist das Alkylmethacrylat ein $C_2$ bis $C_6$-Alkylmethacrylat. In speziellen bevorzugten Ausführungsformen ist das Alkylmethacrylat ein $C_3$ bis $C_5$-Alkylmethacrylat. In speziellen bevorzugten Ausführungsformen ist das Alkylmethacrylat ein $C_4$-Alkylmethacrylat (Polybutylmethacrylat).

In speziellen bevorzugten Ausführungsformen ist das ethylenisch ungesättigte Monomer mit zumindest einer Carbonsäureestergruppe ein Alkylmethacrylat und/oder ein Alkylacrylat. Dies kann zum Beispiel vorgesehen sein, wenn das Bindemittel ein Copolymer und/oder eine Polymermischung ist, welches das ethylenisch ungesättigte Monomer mit zumindest einer Carbonsäureestergruppe einem nach in dieser Schrift genannten Massenanteil enthält.

In speziellen bevorzugten Ausführungsformen umfasst das Bindemittel ein Polyalkylacrylat. In speziellen bevorzugten Ausführungsformen ist das Bindemittel ein Polyalkylacrylat. In speziellen bevorzugten Ausführungsformen umfasst das Bindemittel ein Polyalkylmethacrylat. In speziellen bevorzugten Ausführungsformen ist das Bindemittel ein Polyalkylmethacrylat.

In speziellen bevorzugten Ausführungsformen umfasst oder ist das Bindemittel ein Polyalkylacrylat und ein Polyalkylmethacrylat, vorzugsweise eine Mischung und/oder ein Copolymer eines Polyalkylacrylats und eines Polyalkylmethacrylats. In speziellen bevorzugten Ausführungsformen umfasst das Copolymer, vorzugsweise das Copolymer des Polyalkylacrylats und des Polyalkylmethacrylats statistische Copolymere, Gradientencopolymere, alternierende Copolymere, Blockcopolymere und Pfropfcopolymere der jeweiligen Monomore, vorzugsweise der jeweiligen Monomere des Polyalkylacrylats (daher ein Alkylacrylat) und des Polyalkylmethacrylats (daher ein Alkylmethacrylat).

In speziellen bevorzugten Ausführungsformen ist das Bindemittel ein Polyalkylacrylat, ein Polyalkylmethacrylat, ein Polyurethan, ein Vinylacetat oder Copolymere oder Mischungen von aus zwei oder mehr davon.

In speziellen bevorzugten Ausführungsformen ist das Polyalkylacrylat ein Poly-$C_1$ bis $C_{12}$-Alkylacrylat. In speziellen bevorzugten Ausführungsformen ist das Polyalkylacrylat ein Poly-$C_1$ bis $C_{10}$-Alkylacrylat. In speziellen bevorzugten Ausführungsformen ist das Polyalkylacrylat ein Poly-$C_1$ bis $C_8$-Alkylacrylat. In speziellen bevorzugten Ausführungsformen ist das Polyalkylacrylat ein Poly-$C_2$ bis $C_6$-Alkylacrylat. In speziellen bevorzugten Ausführungsformen ist das Polyalkylacrylat ein Poly-$C_3$ bis $C_5$-Alkylacrylat. In speziellen bevorzugten Ausführungsformen ist das Polyalkylacrylat ein Poly-$C_4$-Alkylacrylat (Polybutylacrylat).

In speziellen bevorzugten Ausführungsformen ist das Polyalkylacrylat ein Polybutylacrylat.

In speziellen bevorzugten Ausführungsformen umfasst oder ist das Bindemittel Polybutylacrylat oder ein Copolymer von Polybutylacrylat, bevorzugterweise ein Copolymer oder eine Mischung von Polybutylacrylat mit einem Polyalkylmethacrylat, besonders bevorzugt ein Copolymer oder eine Mischung von Polybutylacrylat mit einem Polybutylmethacrylat.

In speziellen bevorzugten Ausführungsformen ist oder umfasst das Bindemittel eine Mischung oder Copolymer aus

- einem Polyalkylacrylat, und

- einem Polyalkylmethacrylat, einem Polyurethan, und/oder einem Vinylacetat.

In speziellen bevorzugten Ausführungsformen ist das Polyalkylmethacrylat ein Poly-$C_1$ bis $C_{12}$-alkylmethacrylat In speziellen bevorzugten Ausführungsformen ist das Polyalkylmethacrylat ein Poly-$C_1$ bis $C_{10}$-alkylmethacrylat. In speziellen bevorzugten Ausführungsformen ist das Polyalkylmethacrylat ein Poly-$C_1$ bis $C_8$-alkylmethacrylat. In speziellen bevorzugten Ausführungsformen ist das Polyalkylmethacrylat ein Poly-$C_2$ bis $C_6$-alkylmethacrylat. In speziellen bevorzugten Ausführungsformen ist das Polyalkyl(meth)acrylat ein Poly-$C_3$ bis $C_5$-alkylmethacrylat. In speziellen bevorzugten Ausführungsformen ist das Polyalkylmethacrylat ein Poly-$C_4$-alkylmethacrylat (Polybutylmethacrylat).

In speziellen bevorzugten Ausführungsformen ist das Bindemittel ein Polyalkylacrylat, ein Polyalkyl(meth)acrylat, ein Polyurethan, ein Vinylacetat oder Copolymere oder Mischungen aus zwei oder mehr davon.

In speziellen bevorzugten Ausführungsformen ist das Polybutylacrylat ausgewählt aus der Gruppe bestehend aus Poly-*n*-butylacrylat, Poly-*iso*-butylacrylat, Poly-*tert*-butylacrylat, Poly-butan-2-yl-acrylat oder eine Mischung davon. In speziellen besonders bevorzugten Ausführungsformen ist das Polybutylacrylat Poly-*n*-butylacrylat.

In speziellen bevorzugten Ausführungsformen ist das Polybutylmethacrylat ausgewählt aus der Gruppe bestehend aus Poly-*n*-butylmethacrylat, Poly-*iso*-butylmethacrylat, Poly-*tert*-butylmethacrylat, Poly-butan-2-yl-methacrylat oder eine Mischung und/oder Copolymer davon. In speziellen besonders bevorzugten Ausführungsformen ist das Polybutylmethacrylat Poly-*n*-butylmethacrylat.

In ihren Experimenten haben die Erfinder festgestellt, dass der Einsatz eines Polyalkylacrylat-basierenden Bindemittels, vorzugsweise eines Bindemittels, welches ein Polyalkylacrylat und/oder Polyalkylmethacrylat oder ein Copolymer oder eine Mischung derselben umfasst, oder welches ein Polyalkylacrylat und/oder Polyalkylmethacrylat oder ein Copolymer oder eine Mischung derselben ist, im erfindungsgemäßen nicht-thermoplastischen Verbundmaterial überraschenderweise zu einer Verringerung der Gesamtemission (nach der Norm VDA 277) führt, im Vergleich zu einem analog hergestellten Verbundmaterial mit gleichem Massenanteil an Bindemittel, wobei das Bindemittel in dem analog hergestellten Verbundmaterial Polystyrolacrylat ist. In diesem Zusammenhang ist das Polyalkylacrylat vorzugsweise wie in der hier vorliegenden Schrift definiert, am meisten bevorzugt ist das Polyalkylacrylat ein Polybutylacrylat. In diesem Zusammenhang ist das Polyalkylmethacrylat vorzugsweise wie in der hier vorliegenden Schrift definiert, am meisten bevorzugt ist das Polyalkylmethacrylat ein Polybutylmethacrylat. Das analog hergestellte Verbundmaterial wird im Folgenden als "Referenz-Verbundmaterial" bezeichnet.

Somit ist ebenfalls gezeigt, dass ein Ersetzen des Polystyrolacrylats im Referenz-Verbundmaterial durch ein Polyalkylacrylat und/oder Polyalkylmethacrylat oder ein Copolymer oder eine Mischung derselben, überraschenderweise zu einer Verringerung der Gesamtemission (nach der Norm VDA 277) führt.

Weiter deutet der Vergleich der Gesamtemission (nach der Norm VDA 277) erfindungsgemäßer Verbundmaterialien, in welchen das Polyalkylacrylat-basierende Bindemittel gemäß Tabelle 1 in Beispiel 3 variiert wurde, mit der Gesamtemission des Referenz-Verbundmaterials darauf hin, dass neben dem Effekt der Verringerung der Gesamtemission durch ein Polyalkylacrylat-basierendes Bindemittel, eine Erhöhung des Polyalkylacrylat-Anteils im Bindemittel die Verringerung der Gesamtemission verstärkt.

Von den getesteten Bindemitteln wurde die stärkste Verringerung der Gesamtemission im Vergleich zum Referenz-Verbundmaterial überraschenderweise mit einem Bindemittel festgestellt, in denen das Bindemittel ein Polyalkylacrylat ist. Vorzugsweise ist das Polyalkylacrylat ein Polybutylacrylat.

In speziellen Ausführungsformen kann vorgesehen sein, dass das Bindemittel ein Polymer ist, das mindestens 50 Gew.-% eines Polyalkylacrylats enthält. Es kann vorgesehen sein, dass das Bindemittel ein Polymer ist, das mindestens 60 Gew.-% eines Polyalkylacrylats enthält. Es kann vorgesehen sein, dass das Bindemittel ein Polymer ist, das mindestens 70 Gew.-% eines Polyalkylacrylats enthält. Es kann vorgesehen sein, dass das Bindemittel ein Polymer ist, das mindestens 80 Gew.-% eines Polyalkylacrylats enthält. Es kann vorgesehen sein, dass das Bindemittel ein Polymer ist, das mindestens 90 Gew.-% eines Polyalkylacrylats enthält. Es kann vorgesehen sein, dass das Bindemittel ein Polymer ist, das mindestens 95 Gew.-% eines Polyalkylacrylats enthält. Es kann vorgesehen sein, dass das Bindemittel ein Polymer ist, das mindestens 99 Gew.-% eines Polyalkylacrylats enhält. Es kann vorgesehen sein, dass das Bindemittel ein Polymer ist, das aus einem Polyalkylacrylat besteht.

In speziellen bevorzugten Ausführungsformen wird im VDA 277 die Gesamtkohlenstoff-Emission des nicht-thermoplastischen Verbundmaterials bestimmt. Bei dem VDA 277 handelt es sich um ein Standarduntersuchungsverfahren, welches dem Fachmann geläufig ist. Vorzugsweise wird mittels Headspace-GC eine zerkleinerte Probe (2 g) des nicht-thermoplastischen Verbundmaterials in einem abgeschlossenen Gasvolumen (eine 20 mL Headspace-Durchstechflasche) gelagert und anschließend mit der Gaschromatographie analysiert. Dabei wird die zerkleinerte Probe des nicht-thermoplastischen Polymers vorzugsweise für 5 Stunden bei 120 °C in der Headspace-Durchstechflaschen gehalten, wodurch sich zwischen Probe und Headspace ein Gleichgewicht einstellt. Anschließend vorzugsweise ein Aliquot vom Headspace-Gas abgenommen und mittels zuvor mit Aceton kalibriertem Gaschromatographen untersucht. In speziellen bevorzugten Ausführungsformen wird dabei die Menge an flüchtigen Stoffen (Gesamtemission) bestimmt und in Form der Einheit "$\mu$g Kohlenstoff pro g der Probe" angegeben.

In speziellen bevorzugten Ausführungsformen weist das erfindungsgemäße nicht-thermoplastische Verbundmaterial eine mindestens 2%, eine mindestens 5%, eine mindestens 10%, eine mindestens 15%, eine mindestens 20%, eine mindestens 25%, oder eine mindestens 30% geringere Gesamtemission nach VDA 277 auf das Referenz-Verbundmaterial.

In speziellen bevorzugten Ausführungsformen ist der Polystyrolacrylat-Anteil des nicht-thermoplastischen Verbundmaterials (in Gew.%, bezogen auf das Gesamtgewicht des nicht-thermoplastischen Verbundmaterials) um mindestens 5%, mindestens 10%, mindestens 20%, mindestens 30%, mindestens 40%, mindestens 50%, mindestens 60%, mindestens 70%, mindestens 80%, mindestens 90%, mindestens 95% oder 100% geringer als der Polystyrolacrylat-Anteil in dem Referenz-Verbundmaterial.

In speziellen bevorzugten Ausführungsformen umfasst das Bindemittel ein Polyalkylacrylat, vorzugsweise ein Polybutylacrylat, welches, zum Zeitpunkt des Anmeldetags der Anmeldung, im Handel in Form einer Dispersion erhältlich ist. In speziellen bevorzugten Ausführungsformen umfasst das Bindemittel ein Polyalkylmethacrylat, vorzugsweise ein Polybutylmethacrylat, welches, zum Zeitpunkt des Anmeldetags der Anmeldung, im Handel in Form einer Dispersion erhältlich ist.

In speziellen bevorzugten Ausführungsformen umfasst das Bindemittel ein Polyalkylacrylat, Polyalkylmethacrylat und/oder eine Mischung oder Copolymer davon, welches zum Zeitpunkt des Anmeldetags der Anmeldung, im Handel in Form einer Dispersion erhältlich ist.

In speziellen bevorzugten Ausführungsformen ist die im Handel erhältliche Dispersion, in Form welcher das Bindemittel im Handel erhältlich ist, ausgewählt aus der Gruppe bestehend aus PLEXTOL R 123 (Synthomer), PLEXTOL D 335 (Synthomer), Primal Eco 934 TK (Dow) und AlberdingkUSA AC 2389 (Alberdingk Boley). In einer speziellen besonders bevorzugten Ausführungsform ist die im Handel erhältliche Dispersion Primal Eco 934 TK (Dow). In speziellen bevorzugten Ausführungsformen wird das Bindemittel, in Form der Suspension zugegeben, in welcher das Bindemittel im Handel erhältlich ist. In speziellen Ausführungsformen kann vorgesehen sein, dass das Bindemittel in Form einer Suspension, Dispersion, Emulsion etc. zugegeben wird, beispielsweise in Form einer Emulsion, die das Bindemittel und ein geeignetes Emulsionsmittel, mit einem Feststoffgehalt von 40 bis 70 Gew.%, 40 bis 65% Gew.%, 43,5 bis 61% Gew.%, insbesondere 43.5 bis 56 Gew. %, beispielsweise 43.5 Gew. % bis 44.5 Gew. %, 52,5 bis 55,5 Gew.%, oder 59 bis 61% umfasst.

In speziellen bevorzugten Ausführungsformen umfasst die Dispersion, in Form welcher das Bindemittel erhältlich ist und/oder in Form welcher das Bindemittel zugegeben wird, Bindemittel-Partikel mit einer durchschnittlichen Partikelgröße von 0.2 bis 0.8 $\mu$m, bevorzugt 0.4 bis 0.7 $\mu$m, besonders bevorzugt. 0.5 bis 0.6 $\mu$m. Vorzugsweise beziehen

sich diese durchschnittliche Partikelgrößeangaben auf eine Messung, welche mittels Dynamischer Lichtstreuung in Wasser durchgeführt wurde, vorzugsweise unter Benutzung eines Zetasizer Nano ZSP von Malvern Panalytical.

In speziellen bevorzugten Ausführungsformen weist die Dispersion, in Form welcher das Bindemittel erhältlich ist und/oder in Form welcher das Bindemittel zugegeben wird, eine Viskosität von höchstens 1300 mPa*s, vorzugsweise höchstens 1200 mPa*s, vorzugsweise höchstens 600 mPa*s, vorzugsweise höchstens 500 m*Pas, vorzugsweise höchstens 250 mPa*s, am meisten bevorzugt höchstens 200 mPa*s auf nach ISO 1652, Brookfiled RVT Spindel 1/Umin 10/Faktor 5. In speziellen bevorzugten Ausführungsformen weist die Dispersion, in Form welcher das Bindemittel erhältlich ist und/oder in Form welcher das Bindemittel zugegeben wird, beispielsweise eine Viskosität von 1250 mPa*s, oder 20 bis 200 mPa*s auf.

In speziellen bevorzugten Ausführungsformen weist die Dispersion, in Form welcher das Bindemittel erhältlich ist und/oder in Form welcher das Bindemittel zugegeben wird, einen pH Wert von pH 3 bis pH 10 auf. In speziellen bevorzugten Ausführungsformen weist die Dispersion, in Form welcher das Bindemittel erhältlich ist und/oder in Form welcher das Bindemittel zugegeben wird, einen pH Wert von pH 3,5 bis pH 6,5, vorzugweise einen pH Wert von pH 4 bis pH 6 auf. In speziellen bevorzugten Ausführungsformen weist die Dispersion, in Form welcher das Bindemittel erhältlich ist und/oder in Form welcher das Bindemittel zugegeben wird, einen pH Wert von pH 5 bis pH 8, vorzugsweise einen pH Wert von pH 5,5 bis 7,5, vorzugsweise 7,0 bis 8, am meisten bevorzugt 7,5 auf. In speziellen bevorzugten Ausführungsformen weist die Dispersion, in Form welcher das Bindemittel erhältlich ist und/oder in Form welcher das Bindemittel zugegeben wird, einen pH Wert von pH 7,5 bis pH 9,5, vorzugweise einen pH Wert von pH 8 bis pH 9 auf.

In speziellen bevorzugten Ausführungsformen weist die Dispersion, in Form welcher das Bindemittel erhältlich ist, und/oder in Form welcher das Bindemittel zugegeben wird, Formaldehyd auf, vorzugsweise in einer Konzentration von <100 ppm im Verhältnis zur Masse der Dispersion.

In speziellen bevorzugten Ausführungsformen weist die Dispersion, in Form welcher das Bindemittel erhältlich ist, und/oder in Form welcher das Bindemittel zugegeben wird, ein Konservierungsmittel auf.

Vorzugsweise ist das Konservierungsmittel ein Isothiazolinon. Vorzugsweise ist das Isothiazolinon 5-chloro-2-methyl-4-isothiazolin-3-one, 2-methyl-2H-isothiazol-3-one und/oder ein 1,2-Benzisothiazol-3(2H)-one. Vorzugsweise ist das Isothiazolinon 5-chloro-2-methyl-4-isothiazolin-3-one und 2-methyl-2H-isothiazol-3-one, vorzugsweise im Verhältnis 5-chloro-2-methyl-4-isothiazolin-3-one und 2-methyl-2H-isothiazol-3-one (3:1).

In speziellen bevorzugten Ausführungsformen ist das Bindemittel "kompostierbar gemäß ASTM-D6400-19". Bei ASTM-D6400-19 handelt es sich vorzugsweise um eine Norm, welchem dem Fachmann bekannt ist. In speziellen bevorzugten Ausführungsformen weist der Begriff "kompostierbar gemäß ASTM-D6400-19" darauf hin, dass

i) von dem Bindemittel nach zwölf Wochen kontrollierten Kompostierens, nach einem Siebevorgang durch ein 2,0 mm Sieb nicht mehr als 10% der ursprünglichen trockenen Masse des Bindemittels zurückbleiben, wobei die Kompostierung dabei vorzugsweise in Einklang mit ISO 16929 mit Reaktionsgefäßvolumen von mindestens 35 L durchgeführt oder in Einklang mit ISO 20200 unter thermophilen aeroben Kompostierungsbedingungen durchgeführt wird;

ii) das Bindemittel einen biologischen Abbau aufweist, bei welchem eine Biokonversion zu Kohlenstoffdioxid innerhalb von 180 Tagen gemäß den Voraussetzungen von D5338, ISO 14855-1 oder ISO 14855-2 erreicht,

a. und dabei innerhalb des Testzeitraums 90 % des organischen Kohlenstoffs, welcher im Bindemittel in einer Konzentration von mehr als 1% (nach Trockenmasse) vorliegt in Kohlenstoffdioxid umgewandelt worden ist, entweder insgesamt oder im Vergleich zu einer Positivkontrolle,

b. wobei organische Bestandteile, welche in einer Konzentration zwischen 1 und 10 % vorliegen separat auf dieses Erfordernis geprüft werden,

c. wobei organische Bestandteile, welche in einer Konzentration von unter 1% vorliegen nicht auf ihre biologische Abbaubarkeit geprüft werden, jedoch die Summe dieser nicht geprüften organischen Bestandteile, 5% nicht übersteigt,

d. wobei das Bindemittel vor den Tests in ii) nicht Bedingungen ausgesetzt wird, welche entworfen wurden, um biologischen Abbau zu beschleunigen; und

iii) das Bindemittel den Anforderungen der Bodensicherheit genügt, indem

a. das Bindemittel Konzentrationen an geregelten Metallen aufweist, die weniger als 50% der für Schlämme oder Komposte in dem Land, in dem das nicht-thermoplastische Verbundmaterial verkauft wird, vorgeschriebene Werte betragen, und

b. die Keimrate und die pflanzliche Biomasse des Probekomposts zu mindestens 90 % dem Kompost der entsprechenden Rohlingskomposte zweier verschiedener Pflanzenarten nach OECD-Leitlinie 208 mit den Änderungen in Anhang E der EN 13432 entsprechen.

Die Erfindung erstreckt sich außerdem auf die folgenden Ausführungsformen:

Ausführungsform 1: Nicht-thermoplastisches Verbundmaterial, umfassend:

(i) 25 bis 80 Gew.-% Fasermaterial, bezogen auf das Gesamtgewicht des nicht-thermoplastischen Verbundmaterials; und

(ii) 10 bis 50 Gew.-% eines Bindemittels, bezogen auf das Gesamtgewicht des nicht-thermoplastischen Verbundmaterials;

dadurch gekennzeichnet, dass das Bindemittel in dem nicht-thermoplastischen Verbundmaterial keine durchgängige Phase bildet.

Ausführungsform 2: Nicht-thermoplastisches Verbundmaterial nach Ausführungsform 1, wobei das nicht-thermoplastische Verbundmaterial eine Gesamtemission nach VDA277 von <250 $\mu$gC/g und/ oder nach VDA278 von <200$\mu$g/g aufweist;
und/oder

das nicht-thermoplastische Verbundmaterial einen Fog-Wert von < 1000 $\mu$g/g aufweist
und/oder

das nicht-thermoplastische Verbundmaterial eine Gesamtemission nach AgBB/ DIN EN ISO 16000 von < 0,001 mg/m$^3$ aufweist;
und/oder

das nicht-thermoplastische Verbundmaterial eine TVOC 3d Emission von < 10 mg/m$^3$ aufweist.

Ausführungsform 3: Nicht-thermoplastisches Verbundmaterial nach Ausführungsform 1 oder 2, wobei das Bindemittel ein Polyalkylacrylat, ein Polyalkyl(meth)acrylat, ein Polyurethan, ein Vinylacetat oder Copolymere oder Mischungen aus zwei oder mehr davon ist.

Ausführungsform 4: Nicht-thermoplastisches Verbundmaterial nach einem der vorangehenden Ausführungsformen, wobei das Bindemittel ein Polymer ist, das mindestens 80 Gew.-% eines ethylenisch ungesättigten Monomers mit zumindest einer Carbonsäureestergruppe enthält.

Ausführungsform 5: Nicht-thermoplastisches Verbundmaterial nach einem der vorangehenden Ausführungsformen, wobei das Bindemittel Poly-C$_1$ bis C$_6$-Alkylacrylat umfasst, vorzugsweise Polybutylacrylat umfasst.

Ausführungsform 6: Nicht-thermoplastisches Verbundmaterial nach einem der vorangehenden Ausführungsformen, wobei das Bindemittel einen biologisch abbaubaren Anteil von wenigstens 20 Gew.-%, bezogen auf das Gesamtgewicht des Bindemittels, aufweist.

Ausführungsform 7: Nicht-thermoplastisches Verbundmaterial nach Ausführungsform 6, wobei der biologisch abbaubare Anteil ein Elastomer umfasst, vorzugsweise aus zumindest einem Elastomer besteht.

Ausführungsform 8: Nicht-thermoplastisches Verbundmaterial nach einem der Ausführungsformen 6 oder 7, wobei der biologisch abbaubare Anteil ein Polymer umfasst, vorzugsweise aus zumindest einem Polymer besteht, wobei das Polymer ausgewählt ist aus der Gruppe, bestehend aus Polyester, insbesondere aliphatischer Polyester, Polyamid, Polyacetal, Polyvinylalkohol, Polylactid, Polyurethan, Kautschuk, insbesondere Naturkautschuk, Polyvinylester, insbesondere Polyvinylacetat, Polybutadien, Zellulose und deren Derivate, Stärke und deren Derivate, einem Copolymer von zwei oder mehreren davon und einem Gemisch von zwei oder mehreren davon.

Ausführungsform 9: Nicht-thermoplastisches Verbundmaterial nach einem der vorangehenden Ausführungsformen, wobei das Fasermaterial ausgewählt ist aus Naturfasern, insbesondere Lederfasern, Baumwollfaser, Papierfasern oder Mischungen von zwei oder mehr davon.

Ausführungsform 10: Nicht-thermoplastisches Verbundmaterial nach einem der vorangehenden Ausführungsformen, wobei das nicht-thermoplastische Verbundmaterial ferner zumindest ein Additiv umfasst, vorzugsweise ausgewählt aus der Gruppe, bestehend aus einem anorganischen Salz, einem Farbmittel, einem Gleitmittel, einem Weichmacher, Flammschutzmittel, insbesondere einem halogen-, bor- und antimonfreien Flammschutzmittel, einem Fettungsmittel, einem Gerbstoff, einem Nachgerbstoff, einem Flockungsmittel, einem Fixiermittel, einem Entwässerungshilfsmittel, einem Nassfestmittel, einem Füllstoff und Mischungen von zwei oder mehr davon.

Ausführungsform 11: Verfahren zum Herstellen eines nicht-thermoplastischen Verbundmaterials nach einem der vorangehenden Ausführungsformen, umfassend:

(iii) Bereitstellen eines Gemischs, das das Fasermaterial, optional zumindest eines Additivs und Wasser umfasst;

(ii) Zugeben des Bindemittels und optional zumindest eines Additivs zu dem in Schritt (i) erhaltenen Gemischs; und

(iii) Trocknen des in Schritt (ii) erhaltenen Gemischs.

Ausführungsform 12: Verfahren zum Herstellen eines nicht-thermoplastischen Verbundmaterials nach Ausführungsform 11, wobei das Bereitstellen des Gemischs, das das Fasermaterial und Wasser umfasst, das Herstellen des Fasermaterials durch Zerkleinern eines Basismaterials, vorzugsweise eines Ledermaterials, umfasst.

Ausführungsform 13: Verfahren zum Herstellen eines nicht-thermoplastischen Verbundmaterials nach Ausführungsform 11 oder 12, wobei in Schritt (ii) das Bindemittel und ein Gemisch von Additiven, umfassend einen Gerbstoff, ein Fettungsmittel und ein anorganisches Salz, zugegeben wird.

Ausführungsform 14: Erzeugnis, umfassend das nicht-thermoplastische Verbundmaterial nach einem der Ausführungsformen 1 bis 10, wobei das Erzeugnis vorzugsweise ein Lederfaserstoff ein Überzugsmaterial für Türseitenverkleidung im Fahrzeuginnenbereich, eine Sitzrückenschale im Fahrzeuginnenbereich, eine Abdeckung im Fahrzeuginnenbereich, ein Produkt zur Ausstattung von Verkehrsmitteln, eine Schuhkomponente, insbesondere eine Hinterkappe, ein Absatz, eine Laufsohle und eine Brandsohle, ein Modeaccessoire, oder ein Bauprodukt ist.

Ausführungsform 15: Verwendung des nicht-thermoplastischen Verbundmaterials nach einem der Ausführungsformen 1 bis 10 als Überzugsmaterial für Türseitenverkleidung im Fahrzeuginnenbereich, als Sitzrückenschalen im Fahrzeuginnenbereich, als Abdeckungen zur Herstellung von Bezügen, insbesondere Kissen- und Sitzbezügen, insbesondere für Sitze im Fahrzeuginnenbereich, in Produkten zur Ausstattung von Verkehrsmitteln, von in Schuhkomponenten, insbesondere Hinterkappen, Absätzen, Lauf- und Brandsohlen, von in Modeaccessoires und/oder in Bauprodukten.

Im Folgenden soll die Erfindung unter Bezugnahme auf Ausführungsbeispiele im Detail beschrieben werden. Die Erfindung ist jedoch nicht auf diese Ausführungsbeispiele beschränkt, wobei einzelne Merkmale der Ausführungsbeispiele zusammen mit anderen Merkmalen oder Merkmalen der vorangehenden allgemeinen Offenbarung der Erfindung der Verwirklichung der Erfindung dienen können.

Die Abbildungen zeigen:

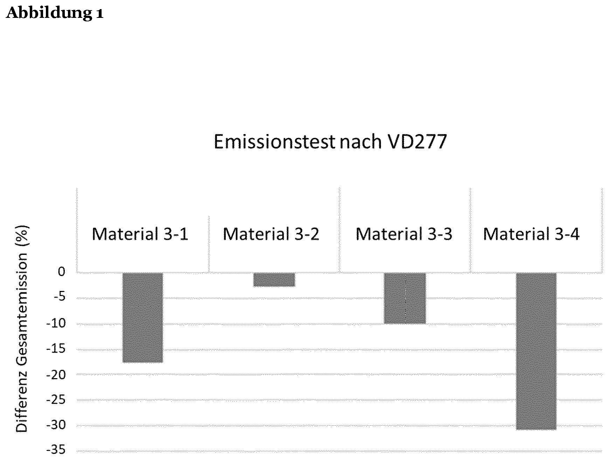

Abbildung 1: Ergebnisse eines Emissionstests nach VDA277, in welchem die Gesamtemission verschiedener erfindungsgemäßer Verbundmaterialien in Bezug zur Gesamtemission eines Referenz-Verbundmaterials gezeigt wird, in welchem ein Polystyrolacrylat als Bindemittel verwendet wurde. Die Differenz der jeweiligen Gesamtemission ist in %-Werten angegeben.

Beispiel 1:

Leder und Falzspäne wurden jeweils im trockenen Zustand zerkleinert, um ein entsprechendes Fasermaterial zu erhalten. 713 kg Lederfasermaterial und 80 kg Falzspanfasermaterial wurden anschließend in einer Bütte mit 11.000 L Wasser vermengt und anschließend mittels eines Kegelrefiners zu einem Stoffbrei vermahlen. Der so erhaltene Stoffbrei wurde mit 575 kg Bindemittel (Acrylat Bindemittel, Primal Eco 934 TK, Dow), 143 kg Fettungsmittel (Polyol CT 688, Smit&Zoon) 119 kg Gerbstoff (Quebracho-Extrakt, Otto Dille) und 90 kg Aluminiumsulfat als Koaguliermittel versetzt. Das erhaltene Gemisch wurde anschließend mittels eines Siebbands entwässert und bei 80°C getrocknet, um ein Verbundmaterial zu erhalten.

Beispiel 2:

Beispiel 2 wurde wie Beispiel 1 durchgeführt, mit der einzigen Ausnahme, dass Anstelle von Primal Eco 934 TK, Dow ein anderes Acrylat-basiertes Bindemittel, nämlich Alberdingk AC 2389, Alberdingk Boley, in einer Menge von 575 kg verwendet wurde.

Die in den Beispielen angegebenen Mengen sind die "otro" (ofentrocken) Mengen, d.h. beziehen sich auf die Trockensubstanz.

Die gemäß den Beispielen 1 und 2 hergestellten Verbundmaterialien wiesen ein nicht-thermoplastisches Verhalten auf, waren insbesondere durch Erhitzen nach dem Trocknen nicht besser verformbar.

Zudem erwiesen sich die so hergestellten nicht-thermoplastischen Verbundstoffe als sehr emissionsarm gemäß verschiedenen Tests, etwa Gesamtemission nach VDA 277 oder VDA 278; Fog-Wert, Gesamtemission nach AgBB/DIN EN ISO 16000; und TVOC 3d (*total volatile organic compound*; 3 Tage) Emission.

Sowohl das nicht-thermoplastische Verhalten als auch die geringe Emission konnten besonders ausgeprägt im Vergleich zu solchen Verbundmaterialien beobachtet werden, in denen aus dem Stand der Technik bekannte Styrol-Acrylat-basierte Bindemittel verwendet wurden.

Beispiel 3:

Um das Emissionsverhalten verschiedener erfindungsgemäßer nicht-thermoplastischer Verbundmaterialien zu charakterisieren, wurde deren Gesamtemission nach der Norm VDA 277 bestimmt. Dabei wurden 100 kg Verbundmaterial untersucht, welches nach der folgenden Vorschrift hergestellt wurde:

45 kg Autoleder-Stanzreste wurden im trockenen Zustand zerkleinert, um ein entsprechendes Fasermaterial zu erhalten. Dieses Fasermaterial anschließend in einer Bütte mit 650 L Wasser vermengt und anschließend mittels eines Kegelrefiners zu einem Stoffbrei vermahlen. Der so erhaltene Stoffbrei wurde mit jeweils 35 kg Bindemittel nach Tabelle 1, 10 kg Fettungsmittel (Polyol CT 688, Smit&Zoon) 5 kg Gerbstoff (Quebracho-Extrakt, Otto Dille) und 5 kg Aluminiumsulfat als Koaguliermittel versetzt. Das erhaltene Gemisch wurde anschließend mittels eines Siebbands entwässert und bei 80°C getrocknet, um ein Verbundmaterial zu erhalten.

Die in den Beispielen angegebenen Mengen sind die "otro" (ofentrocken) Mengen, d.h. beziehen sich auf die Trockensubstanz.

Tabelle 1: Zuordnung Bindemitteleigenschaften und Verbundmaterial

| Name des Testmaterials | Referenz | Material 3-1 | Material 3-2 | Material 3-3 | Material 3-4 |
|---|---|---|---|---|---|
| Name der Dispersion, in welcher das Bindemittel enthalten ist | Acronal® 5400 (BASF) | Plextol™ D335 (Synthomer) | Plextol™ R123 (Synthomer) | Alberdingk USA ® AC2389 (Alberdingk Boley) | PRIMAL™ ECO-934 TK (Dow) |
| Bindemittel | Polystyro 1-Acrylat | Polybutylacrylat-Copolymer | Polybutylacrylat-Copolymer | Polybutylac rylat-Copolymer mit Polymethac rylsäure-Ester | Polybutyla crylat |
| Glasübergan gstemperatur | Nicht bekannt | -20 °C | -15 °C | Nicht bekannt | -30°C |
| Viskosität | 30-350 mPa*s | 1250 mPa*s | < 500 mPa*s | 20-200 mPa*s | <200 mPa*s |
| pH-Wert | 5,5-7,5 | 7,5 | 7,5 | 8-9 | 4-6 |
| Feststoffgeha lt | 56-58% | 60,5% | 60% | 53-55% | 44% |
| Durchschnittliche Partikelgröße | 0,1-10 $\mu$m | 0,6 $\mu$m | 0,5 $\mu$m | Nicht bekannt | Nicht bekannt |

Die Gesamtemission der so hergestellten Materialien wurde anschließend gemäß der Norm VDA 277 untersucht (siehe **Abb**. 1). Dabei ist die Gesamtemission der Verbundmaterialien im Verhältnis zur Referenz nach folgender Formel gezeigt:

$$Differenz\ Gesamtemission = \frac{Gesamtemission_{Verbundmaterial} - Gesamtemission_{Referenz}}{Gesamtemission_{Referenz}} \times 100\%$$

Die Verwendung der jeweiligen Polybutylacrylat-basierenden Bindemittel, hat in sämtlichen Untersuchungen in einer Verringerung der Gesamtemission im Vergleich zur Referenz (mit Polystyrolacrylat-Bindemittel) resultiert. Die stärkste Verringerung der Gesamtemission konnte mit der Bindemittel-Dispersion PRIMAL™ ECO-934 TK erzielt werden, in welcher das Bindemittel Polybutylacrylat ist.

Durchschnittlich haben die nicht-thermoplastischen Verbundmaterialien 3-1 bis 3-4, in welchen ein jeweils Polybutylacrylat-basiertes Bindemittel eingesetzt wurde, eine im Vergleich zur Referenzprobe mit Styrolacrylat-Bindemittel verringerte Gesamtemission, welche im Mittel um 15,3% (mit einer Standardabweichung von $\pm$ 10,5%) verringert ist.

Die in der vorstehenden Beschreibung und den Ansprüchen offenbarten Merkmale können sowohl einzeln als auch in beliebiger Kombination für die Realisierung der Erfindung in den verschiedenen Ausgestaltungen von Bedeutung sein.

**Patentansprüche**

1.   Nicht-thermoplastisches Verbundmaterial, umfassend:

   (i) 25 bis 80 Gew.-% Fasermaterial, bezogen auf das Gesamtgewicht des nicht-thermoplastischen Verbundmaterials; und
   (ii) 10 bis 50 Gew.-% eines Bindemittels, bezogen auf das Gesamtgewicht des nicht-thermoplastischen Verbundmaterials.

2.   Nicht-thermoplastisches Verbundmaterial nach Anspruch 1, wobei das Bindemittel in dem nicht-thermoplastischen Verbundmaterial keine durchgängige Phase bildet.

3.   Nicht-thermoplastisches Verbundmaterial nach Anspruch 1 oder 2, wobei

   das nicht-thermoplastische Verbundmaterial eine Gesamtemission nach VDA277 von <250 $\mu$gC/g und/ oder nach VDA278 von <200$\mu$g/g aufweist; und/oder
   das nicht-thermoplastische Verbundmaterial einen Fog-Wert von < 1000 $\mu$g/g aufweist; und/oder
   das nicht-thermoplastische Verbundmaterial eine Gesamtemission nach AgBB/ DIN EN ISO 16000 von < 0,001 mg/m$^3$ aufweist; und/oder
   das nicht-thermoplastische Verbundmaterial eine TVOC 3d Emission von < 10 mg/m$^3$ aufweist.

4.   Nicht-thermoplastisches Verbundmaterial nach einem der vorangehenden Ansprüche, wobei das Bindemittel ein Polyalkylacrylat, ein Polyalkyl(meth)acrylat, ein Polyurethan, ein Vinylacetat oder Copolymere oder Mischungen aus zwei oder mehr davon ist.

5.   Nicht-thermoplastisches Verbundmaterial nach einem der vorangehenden Ansprüche, wobei das Bindemittel ein Polymer ist, das mindestens 80 Gew.-% eines ethylenisch ungesättigten Monomers mit zumindest einer Carbonsäureestergruppe enthält.

6.   Nicht-thermoplastisches Verbundmaterial nach einem der vorangehenden Ansprüche, wobei das Bindemittel ein Polyalkylacrylat umfasst, vorzugsweise ein Poly-C$_1$ bis C$_6$-Alkylacrylat umfasst, vorzugsweise Polybutylacrylat umfasst.

7.   Nicht-thermoplastisches Verbundmaterial nach einem der vorangehenden Ansprüche, wobei das Bindemittel einen biologisch abbaubaren Anteil von wenigstens 20 Gew.-%, bezogen auf das Gesamtgewicht des Bindemittels, aufweist, wobei der biologisch abbaubare Anteil vorzugsweise ein Elastomer umfasst, vorzugsweise aus zumindest einem Elastomer besteht.

8. Nicht-thermoplastisches Verbundmaterial nach einem der Ansprüche 6 oder 7, wobei der biologisch abbaubare Anteil ein Polymer umfasst, vorzugsweise aus zumindest einem Polymer besteht, wobei das Polymer ausgewählt ist aus der Gruppe, bestehend aus Polyester, insbesondere aliphatischer Polyester, Polyamid, Polyacetal, Polyvinylalkohol, Polylactid, Polyurethan, Kautschuk, insbesondere Naturkautschuk, Polyvinylester, insbesondere Polyvinylacetat, Polybutadien, Zellulose und deren Derivate, Stärke und deren Derivate, einem Copolymer von zwei oder mehreren davon und einem Gemisch von zwei oder mehreren davon.

9. Nicht-thermoplastisches Verbundmaterial nach einem der vorangehenden Ansprüche, wobei das Fasermaterial ausgewählt ist aus Naturfasern, insbesondere Lederfasern, Baumwollfaser, Papierfasern oder Mischungen von zwei oder mehr davon.

10. Nicht-thermoplastisches Verbundmaterial nach einem der vorangehenden Ansprüche, wobei das nicht-thermoplastische Verbundmaterial ferner zumindest ein Additiv umfasst, vorzugsweise ausgewählt aus der Gruppe, bestehend aus einem anorganischen Salz, einem Farbmittel, einem Gleitmittel, einem Weichmacher, Flammschutzmittel, insbesondere einem halogen-, bor- und antimonfreien Flammschutzmittel, einem Fettungsmittel, einem Gerbstoff, einem Nachgerbstoff, einem Flockungsmittel, einem Fixiermittel, einem Entwässerungshilfsmittel, einem Nassfestmittel, einem Füllstoff und Mischungen von zwei oder mehr davon.

11. Verfahren zum Herstellen eines nicht-thermoplastischen Verbundmaterials nach einem der vorangehenden Ansprüche, umfassend:

   (i) Bereitstellen eines Gemischs, das das Fasermaterial, optional zumindest eines Additivs und Wasser umfasst;
   (ii) Zugeben des Bindemittels und optional zumindest eines Additivs zu dem in Schritt (i) erhaltenen Gemischs; und
   (iii) Trocknen des in Schritt (ii) erhaltenen Gemischs.

12. Verfahren zum Herstellen eines nicht-thermoplastischen Verbundmaterials nach Anspruch 11, wobei das Bereitstellen des Gemischs, das das Fasermaterial und Wasser umfasst, das Herstellen des Fasermaterials durch Zerkleinern eines Basismaterials, vorzugsweise eines Ledermaterials, umfasst.

13. Verfahren zum Herstellen eines nicht-thermoplastischen Verbundmaterials nach Anspruch 11 oder 12, wobei in Schritt (ii) das Bindemittel und ein Gemisch von Additiven, umfassend einen Gerbstoff, ein Fettungsmittel und ein anorganisches Salz, zugegeben wird.

14. Erzeugnis, umfassend das nicht-thermoplastische Verbundmaterial nach einem der Ansprüche 1 bis 10, wobei das Erzeugnis vorzugsweise ein Lederfaserstoff ein Überzugsmaterial für Türseitenverkleidung im Fahrzeuginnenbereich, eine Sitzrückenschale im Fahrzeuginnenbereich, eine Abdeckung im Fahrzeuginnenbereich, ein Produkt zur Ausstattung von Verkehrsmitteln, eine Schuhkomponente, insbesondere eine Hinterkappe, ein Absatz, eine Laufsohle und eine Brandsohle, ein Modeaccessoire, oder ein Bauprodukt ist.

15. Verwendung des nicht-thermoplastischen Verbundmaterials nach einem der Ansprüche 1 bis 10 als Überzugsmaterial für Türseitenverkleidung im Fahrzeuginnenbereich, als Sitzrückenschalen im Fahrzeuginnenbereich, als Abdeckungen zur Herstellung von Bezügen, insbesondere Kissen- und Sitzbezügen, insbesondere für Sitze im Fahrzeuginnenbereich, in Produkten zur Ausstattung von Verkehrsmitteln, von in Schuhkomponenten, insbesondere Hinterkappen, Absätzen, Lauf- und Brandsohlen, von in Modeaccessoires und/oder in Bauprodukten.

**Abbildung 1**

Emissionstest nach VD277

Europäisches
Patentamt

European
Patent Office

Office européen
des brevets

## EUROPÄISCHER RECHERCHENBERICHT

**Nummer der Anmeldung**

**EP 23 15 7347**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/102081 A1 (HP CHEM PELZER RES & DEV LTD [IE]; KOETTER CHRISTIAN [DE] ET AL.) 11. Dezember 2003 (2003-12-11) * Seite 6, Zeile 7 – Zeile 29 * * Seite 9, Zeile 28 – Seite 10, Zeile 9 * * Seite 10, Zeile 16 – Seite 11, Zeile 16; Beispiel 1 * * Ansprüche 1, 3, 7, 8, 10, 16, 17 * ----- | 1-12,14, 15 | INV. C08J5/04 C08L33/08 C08L89/06 C08L1/02 |
| Y | GB 360 968 A (INVENZIONI BREVETTI ANONIMA TO) 16. November 1931 (1931-11-16) * Seite 1, Zeile 20 – Zeile 99 * ----- | 1-15 | |
| Y | DE 756 874 C (DEGUSSA) 16. März 1953 (1953-03-16) * das ganze Dokument * ----- | 1-15 | |
| X | WO 94/02300 A1 (HP CHEMIE PELZER RES & DEV [IE]; PELZER HELMUT [DE]) 3. Februar 1994 (1994-02-03) * Ansprüche 1-9 * * Seite 3, Zeile 18 – Zeile 26 * ----- | 1-9,14, 15 | |

**RECHERCHIERTE SACHGEBIETE (IPC)**

C08J
C08F
C09J
C08L

Der vorliegende Recherchenbericht wurde für alle Patentansprüche erstellt

| Recherchenort | Abschlußdatum der Recherche | Prüfer |
|---|---|---|
| München | 19. Juni 2023 | Meiser, Wibke |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 7347

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-06-2023

| Im Recherchenbericht angeführtes Patentdokument | Datum der Veröffentlichung | Mitglied(er) der Patentfamilie | Datum der Veröffentlichung |
|---|---|---|---|
| WO 03102081 A1 | 11-12-2003 | AU 2003238421 A1 | 19-12-2003 |
| | | CN 1659236 A | 24-08-2005 |
| | | EP 1511809 A1 | 09-03-2005 |
| | | JP 2005535792 A | 24-11-2005 |
| | | US 2005202268 A1 | 15-09-2005 |
| | | WO 03102081 A1 | 11-12-2003 |
| GB 360968 A | 16-11-1931 | KEINE | |
| DE 756874 C | 16-03-1953 | KEINE | |
| WO 9402300 A1 | 03-02-1994 | DE 4223703 A1 | 20-01-1994 |
| | | EP 0652818 A1 | 17-05-1995 |
| | | ES 2115065 T3 | 16-06-1998 |
| | | US 5624619 A | 29-04-1997 |
| | | WO 9402300 A1 | 03-02-1994 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020212062 A1

- EP 0967232 A1